# EUROPÄISCHE PATENTSCHRIFT

(11) **EP 3 207 764 B1**
(45) Veröffentlichungstag und Bekanntmachung des Hinweises auf die Patenterteilung: **24.03.2021**
(21) Anmeldenummer: 15775680.0
(22) Anmeldetag: 02.10.2015
(51) Int. Cl.: H05B 45/20, H05B 47/16, H05B 47/19

(54) **VERFAHREN ZUR ANSTEUERUNG EINER LED-LEUCHTE UND LED-LEUCHTE**
METHOD FOR CONTROLLING AN LED LAMP, AND LED LAMP
PROCÉDÉ POUR COMMANDER UN LUMINAIRE À DEL ET LUMINAIRE À DEL

(30) Priorität: 16.10.2014 DE 102014115079
(43) Veröffentlichungstag der Anmeldung: 23.08.2017
(73) Patentinhaber: "Durable" Hunke & Jochheim GmbH & Co. Kommanditgesellschaft, 58636 Iserlohn (DE)
(72) Erfinder: MAIER-HUNKE, Horst-Werner, 58640 Iserlohn (DE)
(74) Vertreter: Beckord & Niedlich Patentanwälte PartG mbB
(86) Internationale Anmeldenummer: PCT/EP2015/072846
(87) Internationale Veröffentlichungsnummer: WO 2016/058846

(56) Entgegenhaltungen:
- EP-A1- 2 608 639
- US-A1- 2011 084 614
- US-A1- 2012 194 082
- US-A1- 2012 206 050
- US-A1- 2014 052 220
- US-A1- 2014 117 877

## Beschreibung

Die Erfindung betrifft ein Verfahren zur Ansteuerung einer LED-Leuchte, welche zumindest eine erste LED-Anordnung und eine zweite LED-Anordnung umfasst, wobei die erste LED-Anordnung und die zweite LED-Anordnung im Betrieb Licht mit unterschiedlichen Lichtspektren, d. h. mit unterschiedlichen mittleren Farbtemperaturen, aussenden. Diese verschiedenen Lichtspektren mischen sich dann zu einem Gesamtlichtspektrum der LED-Leuchte. Eine LED-Anordnung kann dabei aus einer einzelnen LED oder mehreren LEDs bestehen, z. B. eine LED-Baugruppe, umfassend mehrere gemeinsam anzusteuernde LEDs, umfassen. Darüber hinaus betrifft die Erfindung eine entsprechende LED-Leuchte.

Bei derartigen LED-Leuchten hat der Benutzer durch die Ansteuerung der verschiedenen LED-Anordnungen die Möglichkeit, das Gesamtlichtspektrum bzw. die Farbtemperatur der LED-Leuchte zu ändern und damit seinen aktuellen Bedürfnissen und/oder seiner Stimmung anzupassen.

Neuere Forschungen haben gezeigt, dass die Farbe des Lichts nicht zu vernachlässigende Auswirkungen auf das Wohlbefinden und die Leistungsfähigkeit der mit dem Licht bestrahlten Personen hat. Dies gilt insbesondere für den Anteil des blauen Lichts (welches auch als Kaltlicht bezeichnet wird). Blaues Licht wird von den retinalen Ganglienzellen der Augen registriert und kann darüber aktiv Einfluss auf den Biorhythmus nehmen. Der Biorhythmus oder auch Schlaf-/Wachrhythmus wird in der Natur u. a. durch die Farbe des Tageslichts mit gesteuert. Blaues Licht wird in der Natur vor allem vom Tageshimmel abgestrahlt, wodurch der biologische Rhythmus auf "Tag" eingestellt wird und dafür sorgt, dass der Körper wach wird. Die neuen Erkenntnisse weisen darauf hin, dass blaues Licht insbesondere aktiv die Produktion und Wirkung des "Schlafhormons" Melatonin hemmt und dadurch das Glückshormon Serotonin stärker dominieren kann. Insbesondere bei Menschen, die überwiegend in geschlossenen Räumen arbeiten, kann dies dazu führen, dass sie tagsüber zu wenig blaues Licht erhalten und dadurch dieser Rhythmus aus dem Gleichgewicht kommen kann. Daher kann es für den Benutzer zur Erhöhung seines Wohlbefindens und seiner Leistungsfähigkeit wünschenswert sein, wenn er die Möglichkeit hat, angepasst an seinen Tagesablauf immer eine optimale Farbtemperatur des Lichts einzustellen, dem er ausgesetzt ist.

Dies ist möglich, wenn beispielsweise die Anteile des von der ersten LED-Anordnung und der zweiten LED-Anordnung ausgesendeten Lichts innerhalb des Gesamtlichtspektrums der LED-Anordnungen gemäß einer vorgegebenen, insbesondere tageszeitabhängigen, zirkadianen, Spektrums-Steuerungskurve gesteuert werden. Auf diese Weise kann der Benutzer dafür sorgen, dass das Gesamtlichtspektrum bzw. der Farbtemperaturwert des von der LED-Leuchte abgegebenen Gesamtlichts zu jedem Zeitpunkt gut an seinen Tagesrhythmus und seine aktuelle Situation angepasst ist. Beispielsweise könnte eine Spektrums-Steuerungskurve so aussehen, dass morgens bei Arbeitsbeginn langsam der Blaulichtanteil bzw. Kaltlichtanteil hochgefahren wird, um den Benutzer während einer besonders aktiven Phase am Vormittag in seiner Leistungsfähigkeit noch weiter zu unterstützen, wogegen zur Mittagszeit hin der Blaulichtanteil wieder heruntergefahren wird, um den Benutzer durch die biologische Wirkung des Lichts auf die Mittagsruhepause vorzubereiten. Nach der Mittagspause könnte dann eine erneute Erhöhung des Blaulichtanteils vorgesehen sein, und zum Ende der Arbeitszeit wird abends der Blaulichtanteil wieder langsam heruntergefahren, so wie dies auch in der Natur vorgegeben ist.

Wenn dem Benutzer zu einem bestimmten Zeitpunkt die aktuelle Farbtemperatur gemäß der Spektrums-Steuerungskurve nicht mehr zusagt, kann er diese manuell, beispielsweise an einem Bedienmodul der LED-Leuchte, an einer Fernbedienung etc. verändern. Im Laufe der Zeit können sich aber nach und nach die Arbeitsgewohnheiten des Benutzers ändern bzw. die Zeiten verschieben. Dies führt dazu, dass er immer häufiger in den normalen Ablauf gemäß der Spektrums-Steuerungskurve eingreifen muss, um seine optimale Farbtemperatur einzustellen.

In der US 2014/00117877 A1 wird ein Verfahren zur Ansteuerung einer LED-Leuchte gezeigt, wobei die Leuchte LEDs mit unterschiedlichen Lichtspektren umfasst, wobei das Gesamtlichtspektrum der LEDs gemäß einer vorgegebenen zirkadianen Spektrums-Steuerungskurve gesteuert wird. Um die Spektrums-Steuerungskurve festzulegen, beginnt das System zunächst mit der Initiierung einer Standardsequenz, die dann später geändert werden kann. Eine solche Änderung der Standardsequenz erfolgt durch eine Eingabe einer Tageszeit, eines Datums, der geographischen Länge und Breite der Ausrichtung zum Licht, d.h. die Standardsequenz wird letztlich insgesamt an Ort und Zeit angepasst.

In der US 2011/0084614 A1 wird ein Beleuchtungssystem beschrieben, bei dem verschiedene Beleuchtungsszenarien eingegeben werden können. Darüber hinaus ist es für den Benutzer möglich, die Helligkeit einzustellen, d.h. zu dimmen. Eine manuelle Veränderung des Spektrums ist hier nicht möglich.

In der US 2012/0194082 A1 wird ebenso ein multifunktionales Beleuchtungssystem beschrieben, welches eine Beleuchtung gemäß voreingestellter Szenarien erlaubt, wobei durch eine Steuerung sowohl die Lichtintensität als auch die Farbtemperatur moduliert werden. Mit Sensoren werden das Umgebungslicht und weitere Umgebungsparameter wie Temperatur und Feuchtigkeit erfasst. Auf Basis der Werte erfolgt die Steuerung dann immer nach dem Zustand und den Erfordernissen der Lichtumgebung. Zusätzlich hat der Benutzer die Möglichkeit, zu dimmen.

Schließlich wird in der US 2014/0052220 A1 eine personalisierte Beleuchtungssteuerung beschrieben. Mithilfe dieser Steuerung kann ein Beleuchtungssystem, welches aus mehreren Leuchten, auch an verschiedenen Orten, bestehen kann, in deren Bereich sich der Nutzer den Tag über aufhält, so eingestellt werden, dass der Benutzer automatisch gemäß seinen Bedürfnissen beleuchtet wird. Hierzu kann der Benutzer seinen Personentyp (z.B. Frühaufsteher oder Spätaufsteher), sein Geschlecht und sein Alter eingeben. Weiterhin können persönliche Daten des Benutzers erfasst werden, u.a. der aktuelle Hormonspiegel bestimmter Hormone, wie Melatonin und Serotonin, der Hautwiderstand, die Temperatur etc. Unter Verwendung eines Lichtsensors, welcher permanent das Hintergrundlicht und gegebenenfalls auch die Bestrahlung der angesteuerten Lichtquelle erfasst, wird dann vollautomatisch passend Licht für den Benutzer ausgegeben.

In keinem der Dokumente wird das Problem angesprochen, wie der Benutzer relativ einfach und dauerhaft, während der Benutzung des jeweiligen Systems, von ihm selbst gewünschte individuelle Anpassungen der Spektrums-Steuerungskurve vornehmen kann.

Es ist eine Aufgabe der vorliegenden Erfindung, ein Verfahren der eingangs genannten Art dahingehend zu verbessern, dass es die Wahrscheinlichkeit eines manuellen Eingreifens des Benutzers zur aktuellen Veränderung der Farbtemperatur reduziert und somit komfortabler für den Benutzer ist.

Diese Aufgabe wird durch ein Verfahren gemäß Patentanspruch 1 sowie durch eine LED-Leuchte gemäß Patentanspruch 14 gelöst.

Bei dem erfindungsgemäßen Verfahren zur Ansteuerung einer LED-Leuchte werden wie oben erläutert die Anteile des von der ersten LED-Anordnung und der zweiten LED-Anordnung ausgesendeten Lichts innerhalb eines Gesamtlichtspektrums der LED-Anordnung gemäß einer vorgegebenen Spektrums-Steuerungskurve gesteuert. Die Spektrums-Steuerungskurve gibt also vor, mit welchen Leistungen die LED-Anordnungen (relativ zueinander) betrieben werden, um ein gewünschtes Gesamtlichtspektrum zu erhalten, wobei dieses u. a. durch einen Farbtemperaturwert bzw. Lichttemperaturwert (z. B. einen Mittelwert oder ein Maximum des Gesamtlichtspektrums) definiert sein kann. Bei dieser Spektrums-Steuerungskurve handelt es sich vorzugsweise wie beschrieben um eine melanopisch wirksam zeitabhängige, insbesondere zirkadiane Spektrums-Steuerungskurve, welche auf optischem Wege durch die Lichtfarbe bzw. den Blauanteil auf den Melatoninhaushalt des Benutzers wirken kann.

Bei Empfang eines Veränderungssignals von einer Benutzerschnittstelle wird die Spektrums-Steuerungskurve zumindest zeitlich lokal modifiziert. Diese lokale Modifikation wird dann erfindungsgemäß bei einem nachfolgenden erneuten Durchlauf der Spektrums-Steuerungskurve, beispielsweise am nächsten Tag, zumindest teilweise automatisch berücksichtigt. Dies ist unabhängig davon, auf welche Weise bzw. über welche Benutzerschnittstelle der Benutzer die manuelle Veränderung vornimmt, z. B. ob er eine auf einer grafischen Benutzerschnittstelle dargestellte Spektrums-Steuerungskurve manipuliert (wie dies später noch erläutert wird) oder ob er einfach nur den aktuellen Farbtemperaturwert manuell, beispielsweise an einem Bedienmodul der LED-Leuchte, z. B. mit Hilfe eines Farbreglers, mittels einer Sprachsteuerung etc. am Bedienmodul verändert. Insofern ist der Begriff "manuell" nicht so zu verstehen, dass der Benutzer die Neu-Einstellung mit der Hand durchführt, sondern dass die lokale Modifikation der Spektrums-Steuerungskurve nicht automatisch erfolgt, sondern vom Benutzer gezielt für einen bestimmten, vorzugsweise aktuellen, Zeitpunkt oder Zeitraum vorgenommen wird.

Eine solche automatische Berücksichtigung einer lokalen Modifikation beim nachfolgenden Durchlauf der Spektrums-Steuerungskurve, beispielsweise indem diese lokale Modifikation in geeigneter Weise gespeichert wird, führt dazu, dass die Steuerung mit der Spektrums-Steuerungskurve in gewisser Weise "lernfähig" ist. So kann beispielsweise bei jeder (manuellen) Veränderung der Lichtfarbe durch den Benutzer während der Steuerung mit einer Spektrums-Steuerungskurve dafür gesorgt werden, dass nicht nur z.B. das aktuell von der LED-Leuchte ausgegebene Gesamtlichtspektrum sofort geändert wird sondern auch bei dem Wiederverwenden der Spektrums-Steuerungskurve eine Veränderung der Spektrums-Steuerungskurve so hinterlegt wird, dass die manuell eingestellte Veränderung des Farbspektrums vollständig oder anteilig übernommen wird.

Da die Veränderung zumindest teilweise gespeichert und am nächsten Tag wieder berücksichtigt wird, wird die Wahrscheinlichkeit reduziert, dass der Benutzer am nächsten Tag wieder zur entsprechenden Tageszeit eine manuelle Neueinstellung der Farbtemperatur bzw. Lichttemperatur vornehmen muss.

Eine erfindungsgemäße LED-Leuchte, bei der es sich besonders bevorzugt um eine Schreibtischleuchte, Stehleuchte, Wandleuchte oder Deckenleuchte (auch abgehängte Leuchte) handelt, weist zumindest eine erste LED-Anordnung und zumindest eine zweite LED-Anordnung auf, wobei die erste LED-Anordnung und die zweite LED-Anordnung im Betrieb Licht mit unterschiedlichen Lichtspektren aussenden. Bevorzugt gibt eine der LED-Anordnungen, z. B. die erste LED-Anordnung, kaltweißes LED-Licht (vorzugsweise über 5000 K, besonders bevorzugt ca. 6500 K oder darüber) ab und eine andere LED-Anordnung, z. B. die zweite LED-Anordnung, warmweißes Licht (vorzugsweise unter 3300 K, besonders bevorzugt ca. 2700 K oder darunter). Beispielsweise kann die eine LED-Anordnung u. a. einen starken Anteil von Licht im Bereich von 450 bis 500 nm aussenden (da vermutlich Licht bei 480 nm besonders wirksam auf die retinalen Ganglienzellen ist), wogegen die andere LED-Anordnung Licht mit mehr Gelb- und Rotanteilen im Bereich von 580 bis 680 nm aussendet. Jede LED-Anordnung umfasst bevorzugt eine Gruppe von LEDs.

Diese LED-Leuchte umfasst zudem eine Steuerungsanordnung, beispielsweise, wie später noch erläutert wird, eine Steuereinrichtung bzw. ein Steuermodul in oder an der Leuchte und ggf. weitere Steuerungsprogramme auf hiermit gekoppelten Endgeräten, z. B. einem PC oder einem mobilen Endgerät wie einem Smartphone, welche ausgebildet ist, um die Anteile des von der ersten LED-Anordnung und der zweiten LED-Anordnung ausgesendeten Lichts innerhalb eines Gesamtlichtspektrums der LED-Anordnungen gemäß der vorgegebenen Spektrums-Steuerungsfunktion zu steuern. Die Steuerungsanordnung ist zudem so eingerichtet, dass sie bei Empfang eines Veränderungssignals von einer Benutzerschnittstelle die Spektrums-Steuerungskurve zumindest lokal modifiziert und diese lokale Modifikation bei einem nachfolgenden erneuten Durchlauf der Spektrums-Steuerungskurve zumindest teilweise automatisch berücksichtigt. Beispielsweise kann die Steueranordnung hierfür einen Speicher bzw. Zugriff auf entsprechenden Speicherplatz eines mitbenutzten Speichers sowie ein geeignetes Programmmodul aufweisen, das die Modifikation der Spektrums-Steuerungskurve vornimmt, speichert und später wieder darauf zugreift.

Die LED-Leuchte kann auch mehr als zwei LED-Anordnungen mit zumindest teilweise zueinander unterschiedlichen Lichtfarbtemperaturen bzw. Lichtspektren aufweisen. In diesem Fall kann das erfindungsgemäße Steuerungsverfahren entsprechend erweitert werden, d. h. dass alle oder ein Teil der LED-Anordnungen gemäß einer Spektrums-Steuerungskurve gesteuert werden und Modifikationen der Spektrums-Steuerungskurve zumindest zu dem besagten Anteil gespeichert und später wieder berücksichtigt werden können.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und wobei Merkmale verschiedener Ausführungsbeispiele zu neuen Ausführungsbeispielen kombiniert werden können.

Besonders bevorzugt wird eine lokale Modifikation der Spektrums-Steuerungskurve bei einem nachfolgenden Durchlauf der Spektrums-Steuerungskurve nur zu einem vordefinierten Anteil übernommen, beispielsweise mit einem bestimmten prozentualen Anteil kleiner als 100%. der vom Benutzer gewählten Modifikation. Die lokale Modifikation der Spektrums-Steuerungskurve wird hierbei also nicht bereits im nachfolgenden Durchlauf vollständig übernommen. Da bei einer ersten manuellen Veränderung nämlich zunächst nicht unterscheidbar ist, ob der Benutzer grundsätzlich zu dem betreffenden Zeitpunkt eine Veränderung der Spektrums-Steuerungskurve auch an nachfolgenden Tagen wünscht oder ob es sich um eine einmalige Aktion handeln soll und der Benutzer an sich mit der aktuell gültigen Spektrums-Steuerungskurve zufrieden ist, könnte eine sofortige vollständige Übernahme der lokalen Modifikation vom Benutzer nicht gewünscht sein. Eine nur anteilige Übernahme der lokalen Modifikation der Spektrums-Steuerungskurve reduziert die Wahrscheinlichkeit, dass der Benutzer die Veränderung beim nachfolgenden Durchlauf der Spektrums-Steuerungskurve, z. B. am nächsten Tag, wieder rückgängig machen möchte. Wird aber die Modifikation nur zu einem n-ten Anteil übernommen, so würde die Änderung erst dann komplett übernommen sein, wenn der Benutzer ca. n-mal hintereinander zum ungefähr gleichen Zeitpunkt eine identische oder ähnliche Änderung vornimmt. Mit anderen Worten, die Steueranordnung lernt nach und nach, dass der Benutzer zu einer bestimmten Tageszeit ein anderes Farbspektrum bzw. eine andere Farbtemperatur wünscht, als dies ursprünglich durch die Spektrums-Steuerungskurve vorgesehen war. Alternativ oder zusätzlich könnte die Modifikation auch nur dann übernommen werden, wenn der Benutzer mehr als einmal (z. B. mindestens zweimal oder eine andere vorgegebene Anzahl) hintereinander zur ungefähr selben Zeit in etwa die gleiche Veränderung vornimmt.

Besonders bevorzugt ist eine Übernahme der Änderungen jeweils zu ca. 30 %. Würde der Benutzer an drei Tagen hintereinander jeweils zum gleichen Zeitpunkt die gleiche Modifikation durchführen, so wäre bei einer Übernahme der Änderungen jeweils zu ca. 30 % die Spektrums-Steuerungskurve am dritten Tag insgesamt so verändert, dass der Benutzer keine weiteren Änderungen mehr vornehmen muss.

Vorzugsweise erfolgt die zumindest teilweise Übernahme der lokalen Modifikation der Spektrums-Steuerungskurve bei einem nachfolgenden Durchlauf nur dann, wenn ein Lernmodus einer Steueranordnung der LED-Leuchte aktiviert ist. Dieser Lernmodus kann z. B. mittels einer Benutzerschnittstelle ein- oder ausgestellt werden. Der Lernmodus kann dabei vorzugsweise auch die Default-Einstellung der Steueranordnung sein. Schaltet der Benutzer an der Benutzerschnittstelle den Lernmodus aus, so gilt die Veränderung nur für den aktuellen Durchlauf der Spektrums-Steuerungskurve. Vorzugsweise ist die Steueranordnung auch in einen Modus umstellbar, in dem eine manuelle Verstellung der Spektrums-Steuerungskurve dazu führt, dass die Leuchte ab diesem Zeitpunkt überhaupt nicht mehr nach der Spektrums-Steuerungskurve gesteuert wird, sondern stattdessen der aktuelle manuell eingestellte Farbtemperaturwert dauerhaft bleibt, bis beispielsweise die automatische Steuerung nach der Spektrums-Steuerungskurve explizit (über eine Bedienung der Benutzerschnittstelle) wieder in Kraft gesetzt wird und/oder die LED-Leuchte z. B. ausgeschaltet und wieder eingeschaltet wird.

Für die Spektrums-Steuerungskurve werden vorzugsweise zu verschiedenen Zeitpunkten jeweils Stützstellenwerte als Stützpunkte vorgegeben und auf Basis dieser Stützpunkte wird dann eine Interpolationsfunktion als Spektrums-Steuerungskurve ermittelt. Beispielsweise werden bei einer besonders bevorzugten Variante bis zu 24, bevorzugt mindestens zwölf, solcher Stützpunkte über den Tag verteilt. Pro Stützpunkt stehen dann ein Farbtemperaturwert und die jeweilige Zeit zur Verfügung. Wird beispielsweise, wie später noch erläutert, eine App auf einem Smartphone (oder einem PC) genutzt, um die Spektrums-Steuerungskurve zu ermitteln oder zu verändern, reicht es beispielsweise aus, nur diese Stützpunkte an die Steuereinrichtung (bzw. ein Steuermodul) der LED-Leuchte zu übermitteln, die beispielsweise in diese integriert oder mit dieser fest verbunden sein kann. Dabei kann pro Stützpunkt beispielsweise der Farbtemperaturwert sowie der Abstand des Stützpunkts zum nächsten als Wertepaar übertragen werden. Umgekehrt könnte auch von der Steuereinrichtung auf Seiten der LED-Leuchte die Spektrums-Steuerungskurve nur in Form einer Liste von Stützpunkten an die App des Endgeräts übermittelt werden, sofern die Spektrums-Steuerungskurve in der Steuereinrichtung erzeugt oder verändert wird. Entsprechend kann auch im Rahmen der Erfindung eine lokale Modifikation der Spektrums-Steuerungskurve für eine Übernahme in einem nachfolgenden Durchlauf bevorzugt einfach durch Veränderung der Stützpunktliste gespeichert werden. Soll die lokale Modifikation nur teilweise übernommen werden, werden bevorzugt Stützpunkte gespeichert, die einer solchen teilweisen Übernahme entsprechen. Wird in der aktuellen Modifikation der Spektrums-Steuerungskurve beispielsweise für einen bestimmten Stützpunkt der Farbtemperaturwert verdoppelt, wird für den späteren Durchlauf der Stützpunkt mit einem um ca. den Faktor 2/3 erhöhten Farbtemperaturwert gespeichert, sofern nur 1/3 der aktuellen Änderungen für den nachfolgenden Durchlauf übernommen werden sollen.

Es ist also nicht erforderlich, permanent sämtliche Einzelwerte der Spektrums-Steuerungskurve (über der Zeit) zu speichern, sondern es kann jeweils auf Basis der Stützpunkte in gleicher Weise sowohl in einer LED-Leuchten-seitigen Steuereinrichtung als auch in einem mobilen Endgerät oder PC die aktuelle Interpolationsfunktion ermittelt werden. Ist z. B. diese Interpolationsfunktion ein Polynom n-ten Grades, so können dann beispielsweise mit den Stützpunkten die zugehörigen Koeffizienten des Polynoms in der LED-Leuchten-seitigen Steuereinrichtung gespeichert werden, so dass zu jedem Zeitpunkt auf ganz einfache Weise der aktuelle einzustellende Wert der Spektrums-Steuerungskurve gefunden und eingestellt werden kann. Die LED-Leuchten-seitige Steuereinrichtung kann hierzu eine eigene Zeitmessung mit einer eigenen Uhr in der Steuereinrichtung durchführen. Prinzipiell reicht aber auch ein einfacher Zähler aus, sofern der Steuereinrichtung ein erster Zeitpunkt übergeben wird, ab wann die Spektrums-Steuerungskurve läuft, um so eine zeitliche Justierung der Spektrums-Steuerungskurve zu erreichen. Vorzugsweise werden (ggf. abschnittsweise) als Interpolationsfunktionen Polynome 3-ten oder 4-ten Grades genutzt. Es könnten aber vereinfacht auch Polynome 2-ten Grades verwendet werden oder im einfachsten Fall sogar ein Polynom 1-ten Grades, d. h. eine abschnittsweise lineare Interpolation zwischen den Stützpunkten.

Bei einer bevorzugten Variante der Erfindung besteht die Möglichkeit, die Spektrums-Steuerungskurve und/oder die Stützpunkte auf einer grafischen Benutzerschnittstelle, besonders bevorzugt einem Touch-Display, grafisch auszugeben, wobei besonders bevorzugt mit Hilfe der grafischen Benutzerschnittstelle die Steuerungskurve auch veränderbar ist. Alternativ oder zusätzlich ist es ebenso möglich, eine einfache Anzeige des jeweils aktuellen Werts der Spektrums-Steuerungskurve auszugeben, beispielsweise nach Art eines Balkendiagramms oder dergleichen. Ganz besonders bevorzugt erfolgen sowohl eine einfache Anzeige an einem Bedienmodul, beispielsweise direkt an der Leuchte, und eine zusätzliche wahlweise Ausgabe der Spektrums-Steuerungskurve auf einem Touch-Display oder dergleichen, z. B an einem zugeordneten mobilen Endgerät oder PC.

Unabhängig davon, ob eine App auf einem mobilen Endgerät oder PC verwendet wird oder ein Bedienmodul an einer Steuereinrichtung der LED-Leuchte direkt, kann eine Veränderung der Spektrums-Steuerungskurve, insbesondere auf einer grafischen Benutzerschnittstelle (beispielsweise einem Touch-Display), besonders bevorzugt durch Hinzufügen und/oder Entfernen und/oder Verschieben von Stützpunkten erfolgen. Alle diese Veränderungen können auch erfindungsgemäß in geeigneter Weise gespeichert und automatisch beim nachfolgenden Durchlauf der Spektrums-Steuerungskurve berücksichtigt werden. D. h. sowohl die App als auch ggf. die LED-Leuchten-seitige Steuereinrichtung können hierzu eingerichtet sein. Das Verschieben der Stützpunkte kann dabei besonders bevorzugt zweidimensional erfolgen, d. h. ein Stützpunkt kann sowohl in Farbtemperaturrichtung als auch in Zeitrichtung verschoben werden. Wird ein solcher Stützpunkt hinzugefügt, entfernt oder verschoben, so führt dies automatisch dazu, dass eine neue Interpolationsfunktion als neue Spektrums-Steuerungskurve ermittelt wird. Erfolgt diese Veränderung der Spektrums-Steuerungskurve beispielsweise mittels einer App eines mobilen Endgeräts oder PCs, kann die Liste der Stützpunkte oder zumindest der geänderten Stützpunkte wieder an die LED-Leuchten-seitige Steuereinrichtung übertragen werden, welche dann z. B. die Interpolationsfunktion (ggf. abschnittsweise) ebenfalls neu berechnet und neue Koeffizienten hinterlegt.

Wie erläutert, kann ein direkt im oder am Gehäuse der LED-Leuchte angeordnetes oder an anderer Stelle im Raum montiertes und mit der LED-Leuchte verbundenes Bedienmodul als Benutzerschnittstelle verwendet werden. Alternativ oder zusätzlich kann aber, wie ebenfalls bereits mehrfach erwähnt, eine Spektrums-Steuerungskurve auch besonders bevorzugt von einem mobilen Endgerät oder von einem PC an eine Steuereinrichtung der LED-Leuchte übertragen werden. Das mobile Endgerät wird damit vorübergehend zu einem Teil der Steueranordnung der LED-Leuchte, nämlich einer Art Fernsteuerung. Wird (auch) ein mobiles Endgerät und/oder ein PC zur Steuerung der LED-Leuchte genutzt, so können bevorzugt Veränderungen der Spektrums-Steuerungskurve im mobilen Endgerät bzw. dem PC gespeichert werden. Unter einem mobilen Endgerät ist im Rahmen der Erfindung jedes Gerät zu verstehen, welches der Benutzer mit sich tragen kann und welches geeignete Speichermittel und eine Benutzerschnittstelle sowie eine Schnittstelle zur Ankopplung an die Steuereinrichtung der LED-Leuchte aufweist. Hierunter fallen typische Handheld-Geräte insbesondere mit geeigneten Funkschnittstellen oder dergleichen wie Smartphones, Tablet-PCs, Laptops, Uhren, Brillen etc. mit geeigneten Funktionen ähnlich wie Smartphones. Hierzu müssen das mobile Endgerät bzw. der PC nur eine geeignete Anwendungssoftware (auch allgemein üblich als "App" bezeichnet) aufweisen. Die Übertragung erfolgt dabei vorzugsweise drahtlos, besonders bevorzugt über eine kurzreichweitige Funkverbindung. Hierunter fallen zum einen Standards wie Bluetooth, WLAN, DECT oder WPAN-Protokolle, wie ZigBee, besonders bevorzugt Funkverbindungen im Bereich von ca. 10 m oder darunter. Ebenso fallen hierunter aber auch sog. Nahfeldkommunikationsstandards, die eine Übertragung über kurze Strecken von wenigen Zentimetern ermöglichen. Ganz besonders bevorzugt ist die Verbindung mittels einer Bluetooth-Schnittstelle, da die meisten mobilen Endgeräte ohnehin inzwischen über eine Bluetooth-Schnittstelle verfügen und auch entsprechend geeignete Bluetooth-Module standardmäßig erhältlich sind, die in ein geräteseitiges Steuermodul der LED-Leuchte eingebaut werden. Beispielsweise gibt es bereits Mikrocontroller, die innerhalb des Steuermoduls eingesetzt werden können, in die bereits Bluetooth-Funktionen inklusive der Antennen integriert sind, so dass hiermit auch eine kostengünstige Schnittstelle zur Verfügung gestellt werden kann. Ein mobiles Endgerät mit einer geeigneten App kann auch dazu verwendet werden, um mehrere LED-Leuchten zu steuern (auch mit ein und derselben Spektrums-Steuerungskurve), z. B. wenn der Benutzer mehrere Arbeitsplätze mit solchen LED-Leuchten nutzt.

Vorzugsweise kann dabei auch an der LED-Leuchte ein Nahfeld-Kommunikations-Element (z. B. ein NFC-Tag, ein RFID-Etikett oder dergleichen) oder ein Scancode angebracht sein. Zur Parametrierung der Leuchte mittels eines mobilen Endgeräts oder PCs kann dann auf dem mobilen Endgerät bzw. dem PC bei Erkennen des NahfeldKommunikations-Elements durch das Endgerät automatisch (ggf. mit einer Nutzerbestätigung) eine geeignete App aufgerufen und ausgeführt werden, wie dies später noch erläutert wird.

Um gleich bei der ersten Inbetriebnahme der LED-Leuchte durch einen neuen Benutzer diesem eine möglichst gut an ihn angepasste Spektrums-Steuerungskurve zur Verfügung zu stellen, die er möglichst wenig abändern muss, werden vorzugsweise in einer Initialisierungsprozedur bzw. Parametrierungsprozedur (z. B. beim erstmaligen Aufruf der App an einem mit der LED-Leuchte koppelbaren Endgerät und/oder bei der ersten Inbetriebnahme der LED-Leuchte) über eine Benutzerschnittstelle benutzerspezifische Parameter abgefragt und auf Basis dieser benutzerspezifischen Parameter wird dann eine benutzerspezifische individuelle Start-Spektrums-Steuerungskurve ermittelt. Hierzu ist die Steuerungsanordnung der LED-Leuchte, beispielsweise die App eines mobilen Endgeräts zur Fernsteuerung der LED-Leuchte, entsprechend ausgebildet, um in einem geeigneten Benutzerdialog die benutzerspezifischen Parameter abzufragen und darauf basierend die benutzerspezifische individuelle Start-Spektrums-Steuerungskurve zu erstellen bzw. zu berechnen. Die Initialisierungsprozedur kann hierzu z. B. beim erstmaligen Aufruf der App an einem mit der LED-Leuchte koppelbaren Endgerät und/oder bei der ersten Inbetriebnahme der LED-Leuchte automatisch gestartet oder zumindest dem Benutzer angeboten werden.

Zu den "benutzerspezifischen" Parametern gehören hierbei z. B. bevorzugt die "benutzerverhaltensspezifischen" Parameter, wie beispielsweise, wann ein Nutzer üblicherweise welche Tätigkeiten verrichtet oder verrichten muss, beispielsweise wann seine Arbeit beginnt, wann die Arbeit endet, wann er eine Mittagspause macht etc. Ebenso zählen hierzu bevorzugt "benutzergefühlsspezifische" Parameter, wie z. B., wann der Benutzer seines Erachtens die höchste Leistungsbereitschaft hätte, wenn er frei wählen könnte, ob er sich selber zu den Frühaufstehern zählt etc. Nicht unter "benutzerspezifische" Parameter fallen dagegen direkt konkret vorgegebene Ein- und Abschaltzeiten der Lampe oder spezifische Farbtemperaturwerte zu bestimmten Zeitpunkten.

Eine solche Initialisierungsprozedur hat auch ohne die erfindungsgemäße Speicherung und Übernahme von Modifikationen der Spektrums-Steuerungskurve den Vorteil, dass eine komfortablere Bedienung der LED-Leuchte mit einer möglichst gut angepassten Spektrums-Steuerungskurve erreicht wird und ist daher auch ohne eine solche lernfähige Steuerung sinnvoll, auch wenn die Kombination der Methoden natürlich besonders bevorzugt ist.

Bei vielen Tätigkeiten kann es vorkommen, dass unerwartet an den Benutzer Aufgaben herangetragen werden, die kurzfristig die volle Konzentration und Leistungsfähigkeit des Benutzers erfordern. Treten solche Ereignisse kurz vor der Mittagspause oder vor dem Arbeitsende auf, würde beispielsweise bei der zuvor beschriebenen Spektrums-Steuerungskurve durch den bereits vorab reduzierten Kaltlichtanteil bzw. Erhöhung des Warmlichtanteils dafür gesorgt, dass beim Benutzer mehr Melatonin ausgeschüttet wurde und dadurch ggf. die Aufmerksamkeit und Leistungsfähigkeit herabgesetzt wurde. In diesem Fall könnte der Benutzer einfach manuell die Spektrums-Steuerungskurve verändern, was aber zu einer Anpassung der Spektrums-Steuerungskurve an diese lokale Modifikation in einem weiteren Zeitraum führen könnte. Oftmals ist der Benutzer aber mit seiner einmal eingestellten individuellen Spektrums-Steuerungskurve durchaus zufrieden und benötigt nur kurzfristig und zeitlich sehr begrenzt eine Veränderung, meist eine Auffrischung.

Um auf unvorhergesehene Abweichungen im Tagesablauf optimal reagieren zu können, wird daher bevorzugt bei Empfang eines temporären Kurzzeitdosisveränderungssignals, vorzugsweise eines Dosiserhöhungssignals, zumindest die erste LED-Anordnung für eine vordefinierte Dosisveränderungs-Zeitspanne - abweichend von der vorgegebenen Steuerungskurve - vorübergehend so angesteuert, dass sie mit einer vorgegebenen Mindestleistung betrieben wird oder der Anteil des Lichts dieser ersten LED-Anordnung innerhalb des Gesamtlichtspektrums der LED-Anordnungen einen bestimmten Mindestanteil beträgt und dass nach Ablauf der vordefinierten Dosisveränderungs-Zeitspanne die LED-Anordnungen gemäß einer vorgegebenen Steuerungsregel so angesteuert werden, dass das Gesamtlichtspektrum wieder der vorgegebenen Spektrums-Steuerungskurve entspricht. Das heißt, dass zum dann aktuellen Zeitpunkt die jeweiligen Anteile des Lichts der LED-Anordnungen wieder so gewählt sind, dass Licht mit der zu diesem Zeitpunkt durch die Spektrums-Steuerungsfunktion vorgegebenen Gesamtfarbtemperatur bzw. Gesamtlichtspektrum ausgegeben wird.

Dieses Szenario bietet sich wie erwähnt insbesondere an, wenn ein Benutzer bei einem unvorhergesehenen Arbeitseinsatz oder aus einem sonstigen Grund kurzzeitig etwas "frischer" werden möchte. Daher weist vorzugsweise die erste LED-Anordnung ein Lichtspektrum mit einem größeren Blaulichtanteil auf als die zweite LED-Anordnung. Besonders bevorzugt handelt es sich bei der ersten LED-Anordnung um eine LED-Anordnung zur Abgabe von kaltweißem LED-Licht und bei der zweiten LED-Anordnung um eine LED-Anordnung zur Abgabe von warmweißem Licht. Durch die kurzzeitige Erhöhung des Kaltlichts kann für eine größere Unterdrückung des Melatoninausstoßes gesorgt werden, wodurch das Serotonin ansteigt und der Nutzer etwas wacher und frischer wird. Ebenso ist es aber auch möglich, dass die erste LED-Anordnung das wärmere Licht abstrahlt, wogegen die zweite LED-Anordnung das kältere Licht abstrahlt. In diesem Fall würde das Kurzzeitdosisveränderungssignal genau die umgekehrte Wirkung haben, nämlich dass der Warmlichtanteil kurzzeitig erheblich erhöht wird. Dies bietet sich beispielsweise an, wenn der Nutzer beschließt, dass er kurzzeitig eine Entspannungsübung, beispielsweise eine meditative Kurzzeitentspannung oder dergleichen, durchführen möchte, bei der ein zu heller Blaulichtanteil unter Umständen stören könnte. Durch die kurzzeitige Einstellung auf Warmlicht für eine begrenzte Zeit während seiner Entspannungsübung kann er die Wirkung dieser Entspannungsübung verstärken, um anschließend dann im normalen Tagesablauf weiterzumachen, wobei das Licht dann wieder gemäß der vorgegebenen Spektrums-Steuerungskurve gesteuert wird. Insofern ist die Festlegung, welche LED-Anordnung die erste und welche die zweite LED-Anordnung ist, zunächst willkürlich gelegt. Entscheidend ist jedoch die automatische Rückkehr zur voreingestellten optimierten Spektrums-Steuerungskurve nach Ablauf der vorgegebenen Dosisveränderungs-Zeitspanne, so dass vor allem im ersten Fall, wenn der Blaulichtanteil erhöht wird, der Benutzer nicht überstimuliert wird, obwohl er eigentlich gemäß der optimierten Spektrums-Steuerungsfunktion zu diesem Zeitpunkt normalerweise weniger Stimulation benötigt.

Da das Kurzzeitdosisveränderungssignal temporär die Wirkung von Serotonin oder Melatonin verstärken kann, wird es im Folgenden unabhängig davon, ob temporär ein absolut oder relativ erhöhter Blaulichtanteil zur Auffrischung oder ein absolut oder relativ erhöhter Warmlichtanteil zur Beruhigung ausgegeben wird, vereinfacht auch als "Boost-Signal" bezeichnet. Die vordefinierte Dosisveränderungs-Zeitspanne wird dementsprechend als "Boost-Zeitspanne" bzw. die Betriebsart, in der die LED-Leuchte bzw. zumindest die erste LED-Anordnung während der Boost-Zeitspanne betrieben wird, als "Boost-Modus" bezeichnet.

Grundsätzlich ist es bei einer bevorzugten Weiterbildung der Erfindung auch möglich, dass bei einem Empfang eines ersten Boost-Signals in Richtung der Erhöhung des Kaltlichtanteils dieser kurzfristig erhöht wird und umgekehrt bei Empfang eines entsprechenden zweiten Boost-Signals in Warmlichtrichtung der Warmlichtanteil in umgekehrter Weise erhöht wird. In diesem Fall können vorzugsweise entsprechende Schnittstellen vorgesehen sein, um jeweils ein Boost-Signal in die gewünschte Richtung vorzugeben. Auch könnte eine temporäre Beruhigungsphase mit einer nachfolgenden kurzen Erfrischungsphase gekoppelt sein, so dass der Benutzer leichter wieder "wach" wird.

Die Steuerungsanordnung weist hierzu vorzugsweise zumindest eine Kurzzeitdosisveränderungs-Schnittstelle, vorzugsweise eine Dosiserhöhungs-Schnittstelle, auf (im Folgenden, ohne die Erfindung auf eine Taste zu beschränken, auch vereinfacht "Boost-Taste" genannt) und ist entsprechend zur Durchführung des Boost-Modus bei einem Empfang eines Kurzzeitdosisveränderungssignals von dieser Kurzzeitdosisveränderungs-Schnittstelle ausgebildet. Die Boost-Taste kann dabei an einem Bedienmodul in oder an der Leuchte selbst oder einem damit verbundenen Bedienmodul angeordnet sein. Zusätzlich oder alternativ kann ein Kurzzeitdosisveränderungssignal auch von einem mobilen Endgerät oder einem PC, vorzugsweise drahtlos, an die Steuereinrichtung der LED-Leuchte übertragen werden. Zum Beispiel kann die App auf einer grafischen Benutzeroberfläche eine virtuelle Boost-Taste zur Verfügung stellen.

Prinzipiell ist es auch möglich, nicht nur die oben beschriebenen "normalen" manuellen Veränderungen der Lichtfarbe durch den Benutzer, sondern auch das Einstellen des Boost-Modus bei dem erfindungsgemäßen Lernmodus zu berücksichtigen. Das heißt, wenn der Benutzer mehrere Tage hintereinander zur gleichen Zeit den Boost-Modus z.B. für die Blaulichtanteilerhöhung einschaltet, kann automatisch die Spektrums-Steuerungskurve so verändert werden, dass dem Benutzer zu diesem Zeitpunkt mehr Blaulicht zur Verfügung gestellt wird, auch wenn hierbei nicht unbedingt zum betreffenden Zeitpunkt ein derart hoher Blaulichtanteil wie im Boost-Modus automatisch eingestellt wird. Dabei kann die Einstellung auch so sein, dass erstmals das Einstellen des Boost-Modus zu einer Veränderung der Spektrums-Steuerungsfunktion führt, wenn der Benutzer mindestens zweimal (oder öfter als eine andere vorgegeben Anzahl) zur ungefähr selben Zeit den Boost-Modus auslöst.

Damit das Licht der ersten LED-Anordnung innerhalb des Gesamtlichtspektrums der LED-Anordnungen einen bestimmten Mindestanteil beträgt, reicht eine Erhöhung der Leistung relativ zu der anderen LED-Anordnung bzw. den anderen LED-Anordnungen aus. D.h. es könnten auch bei Empfang des Kurzzeitdosisveränderungssignals alle LED-Anordnungen (ggf. einschließlich der ersten LED-Anordnung) in der Leistung reduziert werden, jedoch unterschiedlich stark, so dass der Anteil des Lichts der ersten LED-Anordnung größer wird, auch wenn insgesamt das Licht gedimmt wird. Dies könnte insbesondere für eine temporäre Entspannungsphase vorteilhaft sein.

Bei einer besonders bevorzugten Variante wird jedoch die erste LED-Anordnung im Boost-Modus mit einem maximalen Anteil am Gesamtlichtspektrum betrieben. Besonders bevorzugt wird, zumindest wenn sie den erhöhten Blauanteil aufweist und zur "Auffrischung" des Benutzers dient, die erste LED-Anordnung dabei mit einer maximalen Leistung betrieben, d. h. selbst wenn es möglich ist, die LED-Leuchte zu dimmen, wird eine solche Dimm-Einstellung kurzzeitig außer Kraft gesetzt und eine maximale Dosis Licht der ersten LED-Anordnung ausgesendet, um die Melatonin-Ausschüttung temporär größtmöglich zu reduzieren und die Wirkung des Glückshormons Serotonin dadurch zu verstärken. Weiterhin wird bevorzugt im Boost-Modus die zweite LED-Anordnung abgeschaltet oder zumindest unterhalb einer definierten Leistung betrieben, so dass bei maximaler Leistung einer ersten LED-Anordnung mit Kaltlicht gleichzeitig nur minimales Warmlicht ausgesendet wird, z. B. wenn die erste LED-Anordnung selbst auch einen Spektrumsanteil im gelb/roten Bereich hat.

Wenn die LED-Leuchte mehr als zwei LED-Anordnungen mit unterschiedlichen Lichtfarbtemperaturen bzw. Lichtspektren aufweist, kann z. B. auch für mehrere bzw. sogar für jede der LED-Anordnungen ein eigener Boost-Modus bzw. eine eigene Boost-Taste vorgesehen sein, um für einen beschränkten Zeitraum die Leistung der betreffenden LED-Anordnung abweichend von einer voreingestellten Spektrums-Steuerungskurve zu erhöhen. Es ist auch möglich, dass im Boost-Modus eine zusätzliche LED-Anordnung verwendet wird, um zum Beispiel die Wirkung noch weiter zu verstärken, insbesondere wenn es um eine Auffrischung des Nutzers geht.

Die Dosisveränderungs-Zeitspanne beträgt vorzugsweise maximal ca. 30 Minuten, besonders bevorzugt maximal ca. 20 Minuten, ganz besonders bevorzugt maximal ca. 10 Minuten. Die ungefähre Angabe "ca." ist dabei so zu verstehen, dass die Dosisveränderungs-Zeitspanne z. B. noch eine kurze Anstiegszeit mit einer Zeitkonstante im Sekundenbereich, vorzugsweise von nur wenigen Sekunden, einschließt, in der die erste LED-Anordnung hochgefahren werden kann, wenn eine instantane Änderung der Farbtemperatur bzw. Lichttemperatur nicht gewünscht wird.

Wie erwähnt, erfolgt die Rückstellung nach der Dosisveränderungs-Zeitspanne auf das Gesamtlichtspektrum gemäß einer vorgegebenen Steuerungsregel. Dies schließt grundsätzlich zwar ein, dass auch eine instantane Rückstellung erfolgen kann, d. h. unmittelbar nach Ablauf der Zeitspanne eine Umstellung auf die zu diesem Zeitpunkt vorgesehenen Anteile im Gesamtlichtspektrum gemäß der Spektrums-Steuerungskurve erfolgt. Besonders bevorzugt sieht diese Steuerungsregel aber vor, dass nach Ablauf der vordefinierten Dosisveränderungs-Zeitspanne die LED-Anordnungen so angesteuert werden, dass der Anteil des Lichts der ersten LED-Anordnung im Gesamtlichtspektrum über eine bestimmte Rückstellungs-Zeitspanne, vorzugsweise von mindestens 30 Sek., hinweg reduziert wird, bis das Gesamtlichtspektrum wieder der vorgegebenen Spektrums-Steuerungskurve entspricht. D. h. es wird beispielsweise langsam, mit einer Zeitkonstante im Minutenbereich, nach der vorgegebenen Steuerungsregel die Leistung der ersten LED-Anordnung wieder heruntergefahren und ggf. die Leistung der zweiten LED-Anordnung gleichzeitig wieder hochgefahren.

Der Boost-Modus dient dazu, kurzfristig eine Umstellung des Gesamtlichtspektrums zur Anpassung an unerwartete Situationsänderungen vorzunehmen. Andererseits soll aber bevorzugt bewusst gemäß einer z. B. zirkadianen Spektrums-Steuerungskurve optimales Licht für den Benutzer abgegeben werden. Es ist dann sinnvoll, Vorkehrungen zu treffen, dass nicht vom Benutzer unbewusst durch ständige Umschaltung in den "Boost-Modus" letztlich die Spektrums-Steuerungskurve für einen zu großen Zeitraum außer Kraft gesetzt wird. Hierzu wird im Rahmen des erfindungsgemäßen Verfahrens bevorzugt innerhalb einer vorgegebenen Akzeptanzzeitspanne nur eine bestimmte maximale Anzahl von Kurzzeitdosisveränderungssignalen, insbesondere Dosiserhöhungssignalen, akzeptiert, bei denen dann tatsächlich eine von der vorgegebenen Ansteuerungskurve abweichende Ansteuerung der LED-Anordnungen erfolgt. Bei Empfang eines weiteren Kurzzeitdosisveränderungssignals nach Erreichen der maximalen Anzahl von Kurzzeitdosisveränderungssignalen erfolgt keine Abweichung von der gegebenen Ansteuerungskurve mehr. Hierzu kann vorzugsweise von der Steuereinrichtung gespeichert werden, zu welchem Zeitpunkt ein Kurzzeitdosisveränderungssignal erfolgt, und anschließend wird dann die Anzahl der in der Zeitspanne ab dem erstmaligen Empfang eines Kurzzeitdosisveränderungssignals empfangenen Kurzzeitdosisveränderungssignale gespeichert und mit einem Grenzwert verglichen. Die Akzeptanzzeitspanne beträgt vorzugsweise mindestens vier Stunden, besonders bevorzugt mindestens acht Stunden und ganz besonders bevorzugt mindestens zwölf Stunden. Die innerhalb des Akzeptanzzeitraums maximal akzeptierte Anzahl von Kurzzeitdosisveränderungssignalen beträgt beispielsweise bevorzugt vier, besonders bevorzugt zwei. Dies hängt aber auch von der Länge der Akzeptanzzeitspanne ab. Grundsätzlich ist es auch möglich, mehrere ineinander geschachtelte Akzeptanzzeitspannen zu überwachen, beispielsweise, dass der Boost-Modus nicht mehr als zweimal in vier Stunden, aber nicht mehr als viermal innerhalb von zwölf Stunden verwendet werden kann.

Die Steuerungsanordnung der LED-Leuchte weist besonders bevorzugt zudem zumindest eine Dimmer-Schnittstelle auf und ist so ausgebildet, dass über die Dimmer-Schnittstelle mittels eines geeigneten Dimm-Signals die Gesamtmenge des Lichts der LED-Anordnungen, d. h. die Helligkeit bzw. Gesamtleistung der LED-Leuchte, verstellbar ist, vorzugsweise unabhängig von der Farbtemperatur. Diese Dimmer-Schnittstelle kann beispielsweise auf einem LED-Leuchten-seitigen Bedienmodul und/oder in einer App eines mobilen Endgeräts angeordnet sein. Außerdem können die LED-Leuchte und/oder das mobile Endgerät mit einem Helligkeitssensor ausgerüstet sein, über den die Helligkeit der LED-Anordnungen umgebungslichtabhängig geregelt wird. Dabei können auch bereits im Endgerät vorhandene Sensoren, z. B. eine Kamera, mit genutzt werden. Ebenso ist die Nutzung eines Bewegungs- oder Präsenzsensors möglich, über den die Helligkeit in Abhängigkeit von einer Nutzeranwesenheit geregelt wird.

Unter einer unabhängigen Steuerung von Dimmung und Farbtemperatur (bzw. Lichtspektrum) der LED-Leuchte ist hierbei zu verstehen, dass beispielsweise eine definierte Gesamtmenge des Lichts bzw. Gesamtleistung der LED-Anordnungen eingestellt werden kann, die sich dann in der Regel auch nicht verändert, bis ein neues Dimm-Signal zur Veränderung empfangen wird. Solange diese Gesamtleistung eingestellt ist, kann durch Verschieben der Leistungsanteile der ersten und der zweiten LED-Anordnung dafür gesorgt werden, dass bei gleichbleibender Gesamtleistung sich das Farbspektrum in der gewünschten Weise gemäß der Spektrums-Steuerungsfunktion, insbesondere der Spektrums-Steuerungskurve, verändert. Lediglich bei Verwendung des Boost-Modus wird bei einer bevorzugten Variante dafür gesorgt, dass gleichzeitig mit der Veränderung des Farbspektrums, beispielsweise auf den maximalen Leistungswert der ersten LED-Anordnung oder in einer temporären Entspannungsphase, auch die Dimmung außer Kraft gesetzt wird und z. B. tatsächlich eine Maximalleistung bzw. reduzierte Gesamtleistung ausgegeben wird. Beispielsweise kann die Steuerung auch so eingerichtet sein, dass im normalen Ablauf gemäß der Spektrums-Steuerungskurve maximal (insgesamt) eine Leistung von 80 % abgegeben wird, die sich auf die LED-Anordnungen verteilt. Dies ist insbesondere in einem Boost-Modus vorteilhaft, wenn es darum geht, dem Benutzer kurzfristig möglichst viel Blaulicht zukommen zu lassen, um den Melatonin-Ausstoß zu senken.

Eine solche Regelung der Lichtfarbe gemäß einer vorgegeben Spektrums-Steuerungsfunktion, insbesondere Spektrums-Steuerungskurve, bei fest eingestelltem Dimm-Wert erfolgt bevorzugt mittels eines Verfahrens und einer entsprechend ausgebildeten Steueranordnung, bei denen zumindest die erste LED-Anordnung und die zweite LED-Anordnung mit einem bestimmten Stromverhältnis angesteuert werden. Besonders bevorzugt werden dabei die erste LED-Anordnung und die zweite LED-Anordnung jeweils in einem Pulsweitenmodulationsverfahren (PWM-Verfahren) angesteuert. Mit diesem PWM-Verfahren wird jeweils die Leistung bzw. Helligkeit der einzelnen LED-Anordnungen gesteuert. Bevorzugt können dabei die LED-Anordnungen, z. B. über mindestens einen Schaltstromregler oder Konstantstromregler der Steueranordnung, mit einem gemeinsamen Gesamtstrom, insbesondere einem Konstantstrom, betrieben werden, und dieser Gesamtstrom wird in zeitlich verschiedenen Phasen auf die verschiedenen LED-Anordnungen umgeschaltet. Mit anderen Worten, die durch den Gesamtstrom vorgegebene Leistung, welche letztlich durch den Dimm-Wert bestimmt wird, wird auf die gegebenen LED-Anordnungen aufgeteilt. Dabei erfolgt besonders bevorzugt zumindest teilweise bei einem Umschalten des Gesamtstroms von einer LED-Anordnung auf eine andere LED-Anordnung kurzzeitig, d. h. im µs-Bereich (z. B. für 10 µs), ein paralleler Betrieb der beiden LED-Anordnungen, es sei denn, dass nicht ohnehin wegen der reduzierten Gesamtleistung zwischen dem Umschalten für einen längeren Zeitraum gar keine Bestromung der LED-Anordnungen innerhalb des PWM-Verfahrens erfolgen soll. Wie später noch anhand der Figurenbeschreibung erläutert wird, ist dies relativ einfach durch eine Signalverzögerung realisierbar. Im Überlappzeitraum teilt sich dann der Strom kurzzeitig auf beide LED-Anordnungen auf, d. h. für die eine LED-Anordnung wird die Leistung heruntergefahren, während gleichzeitig die Leistung der anderen LED-Anordnung erhöht wird. Durch diese Steuerungsmethode kann Flicker weitgehend vermieden werden, die elektromagnetische Störfestigkeit wird erhöht und auch die elektromagnetische Störaussendung reduziert. Daher ist diese Vorgehensweise auch bei PWM-Verfahren zur Ansteuerung mehrerer LED-Anordnungen sinnvoll, wenn nicht der erfindungsgemäße Boost-Modus zur Verfügung wird.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine Seitenansicht auf ein Ausführungsbeispiel einer erfindungsgemäße LED-Leuchte,
- Figur 2: ein vereinfachtes Blockschaltbild eines Ausführungsbeispiels einer Steueranordnung für eine erfindungsgemäße LED-Leuchte, umfassend eine LED-Leuchten-seitige Steuereinrichtung sowie ein damit gekoppeltes mobiles Endgerät,
- Figur 3: ein Schaltbild für ein Ausführungsbeispiel einer Steuereinrichtung der LED-Leuchte,
- Figur 4: ein Pulsdiagramm für die PWM-Steuersignale zweier LED-Anordnungen sowie für das Gesamt-PWM-Stromsignal der LED-Anordnungen gemäß einem ersten Ausführungsbeispiel,
- Figur 5: ein Pulsdiagramm für die PWM-Steuersignale zweier LED-Anordnungen sowie für das Gesamt-PWM-Stromsignal der LED-Anordnungen gemäß einem zweiten Ausführungsbeispiel,
- Figur 6: eine schematische Darstellung eines Beispiels einer grafischen Benutzeroberfläche zur Einstellung einer Spektrums-Steuerungskurve,
- Figur 7: eine Darstellung der Spektrums-Steuerungskurve gemäß Figur 6 nach bzw. während einer Veränderung von Stützpunkten,
- Figur 8: eine Darstellung eines Beispiels einer Spektrums-Steuerungskurve und deren temporärer Veränderung bei Erhalt eines erfindungsgemäßen Kurzzeitdosisveränderungssignals,
- Figur 9: eine schematische Darstellung eines Beispiels einer grafischen Benutzeroberfläche zur weiteren Einstellung von Parametern einer LED-Leuchte,
- Figur 10: ein Flussdiagramm zur Verdeutlichung der Initialisierung der Steuerung durch Ermittlung einer individuellen benutzerspezifischen Spektrums-Steuerungskurve.

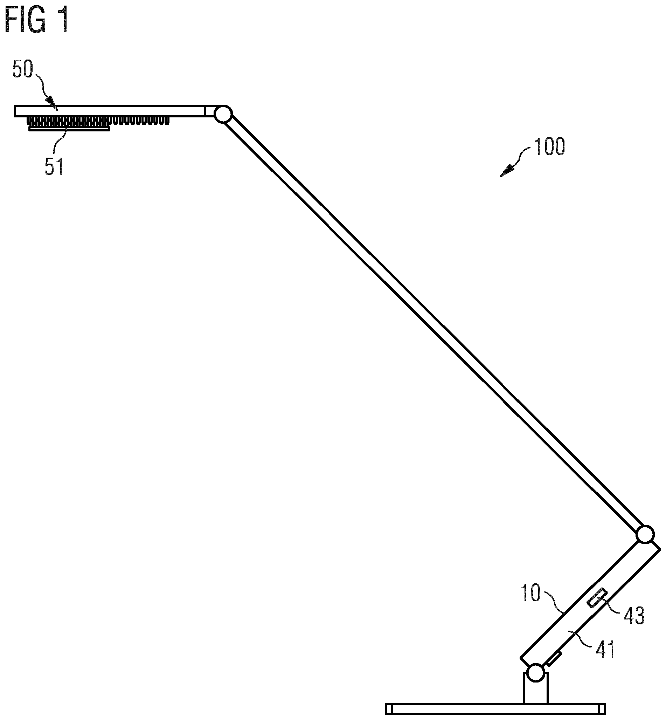

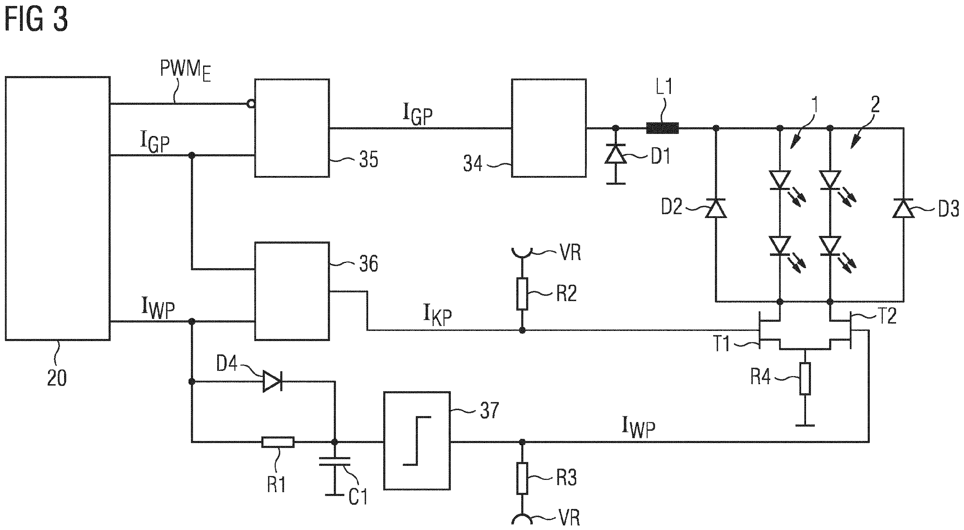

In Figur 1 ist als ein bevorzugtes Ausführungsbeispiel einer erfindungsgemäßen LED-Leuchte 100 eine Tischleuchte 100 gezeigt, die vorzugsweise als Schreibtischleuchte 100 eingesetzt werden kann. Die Tischleuchte 100 umfasst einen Leuchtkopf 50. Der Leuchtkopf 50 weist zur Lichterzeugung ein Leuchtmodul 51 mit mehreren LED-Anordnungen auf, hier konkret beispielsweise zwei LED-Anordnungen 1, 2 mit jeweils einem LED-Paar mit zwei einzelnen LEDs (wie in Figur 3 gezeigt). Die eine LED-Anordnung 1 enthält LEDs, welche kaltweißes Licht mit einem starken Maximum im blauen Bereich um 400 nm abgeben. Beispielsweise kann es sich hierbei um LEDs vom Typ XLamp XM-L KW-U2 der Firma Cree handeln. Die andere LED-Anordnung 2 enthält LEDs, welche mehr warmweißes Licht mit einem starken Maximum im gelb-roten Bereich um 600 nm abgeben. Beispielsweise kann es sich hierbei um LEDs vom Typ XLamp XM-L2 WW-T3 der Firma Cree handeln.

Die LED-Anordnungen sind im Leuchtmodul 51 auf eine LED-Platine, beispielsweise eine Metallkernplatine (nicht gezeigt), gelötet. Zur Steuerung der LED-Anordnungen 1, 2 und zum Einstellen, Anpassen und Ändern der Beleuchtungsintensität (Helligkeit) bzw. Gesamtleistung sowie der Farbtemperatur des insgesamt vom Leuchtmodul 51 abgegebenen Lichts weist die Leuchte 100 ein Steuermodul 41 auf, welches in einem unteren Bereich des Leuchtenarms untergebracht ist und über Leitungen mit dem Leuchtmodul 51 verbunden ist. Teil dieses Steuermoduls 41 ist auch ein Bedienmodul 10. Das Bedienmodul 10 kann per Hand von einem Benutzer durch Betasten einer Bedienfläche betätigt werden.

Das Leuchtmodul 51 umfasst neben den auf der Platine angeordneten LEDs auch eine Reflektoranordnung, welche dafür sorgt, dass das Licht in einem bestimmten Abstrahlwinkel abgestrahlt wird, sowie eine Diffusoranordnung, beispielsweise hier in Form einer einfachen Milchglasscheibe oder dergleichen, welche das von den verschiedenen LEDs der LED-Anordnungen 1, 2 abgestrahlte Licht streut und so gut vermischt, dass eine damit beleuchtete Fläche gleichmäßig ausgeleuchtet wird. Außerdem weist das Leuchtmodul 51 auch noch geeignete Einrichtungen auf, wie beispielsweise Kühlrippen oder dergleichen, um für eine Abführung der überschüssigen Wärme zu sorgen.

Bei der gezeigten LED-Leuchte 100 handelt es sich um ein relativ einfaches Ausführungsbeispiel mit nur einem Leuchtkopf 50 und einem Leuchtmodul 51. Die LED-Leuchte 100 könnte ebenso mehrere Leuchtköpfe bzw. Leuchtmodule aufweisen, beispielsweise als Stehlampe einen doppelten Leuchtkopf in verschiedene Richtungen nach unten. Ebenso ist es auch möglich, dass die Abstrahlrichtung vom Leuchtkopf aus nach oben geht, so dass die Lampe wie ein Deckenfluter wirkt oder zur Seite hin als Wallwasher. Weitere mögliche Varianten sind auch Lampen mit Leuchtköpfen, die wahlweise oder gleichzeitig in zwei verschiedene Richtungen Licht abstrahlen können, beispielsweise mit zwei Leuchtmodulen mit eigenen LED-Anordnungen, wobei ein Leuchtmodul nach unten leuchtet und das andere nach oben als Deckenfluter und die Leuchtmodule unabhängig oder in Kombination betrieben werden können.

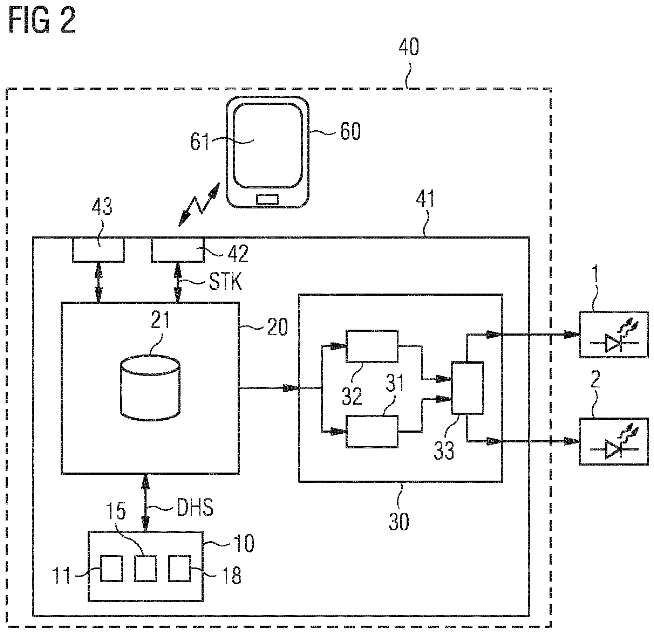

Figur 2 zeigt eine Steueranordnung 40 für eine LED-Leuchte 100. Hier sind die beiden LED-Anordnungen 1, 2 nur symbolisch mit einer LED dargestellt. Es kann sich wie erläutert hierbei aber auch um mehrere LEDs handeln, wie z. B. zu Figur 1 erläutert. Die Steueranordnung 40 umfasst eine auf Seiten der LED-Leuchte 100 angeordnete Steuereinrichtung 41, beispielsweise hier in Form des Steuermoduls 41, welches im unteren Teil des Arms der LED-Leuchte 100 angeordnet ist (siehe Figur 1). Dieses Steuermodul 41 umfasst, wie schon erwähnt, ein Bedienmodul 10 mit mehreren Bedienelementen 11, 15, 18, hier vorzugsweise in Form von kapazitiv auf Berührung wirkenden "Tasten".

Neben diesem Bedienmodul 10 bzw. dieser direkt an der LED-Leuchte 100 angeordneten Benutzerschnittstelle gibt es weitere Schnittstellen 42, 43 zur direkten oder indirekten Kopplung mit einem mobilen Endgerät 60 und/oder einem externen Speicher (nicht dargestellt). Bei der einen Schnittstelle 43 handelt es sich um eine Steckerschnittstelle 43, beispielsweise eine USB-Schnittstelle 43, um das mobile Endgerät oder einen USB-Speicher oder dergleichen mit dem Steuermodul 51 zu verbinden und/oder als Ladeschnittstelle zum Aufladen eines mobilen Endgeräts. Bei der anderen Schnittstelle 42 handelt es sich um eine drahtlose Schnittstelle 42, vorzugsweise im kurzreichweitigen Funkbereich, hier konkret um eine bevorzugte Bluetooth-Schnittstelle 42. Auch über diese drahtlose Schnittstelle 42 kann ein mobiles Endgerät 60 mit einer grafischen Benutzerschnittstelle 61, vorzugsweise ein Smartphone, eine Uhr mit entsprechender Funktion oder dergleichen, mit der LED-Leuchte 100 gekoppelt werden. Auf diesem mobilen Endgerät 60 ist eine App implementiert, die eine Steuerfunktionalität für die LED-Leuchte 100 bietet. Beispielsweise kann hiermit eine Spektrums-Steuerungskurve ermittelt werden, und Werte für diese Spektrums-Steuerungskurve können zur Steuerung der LED-Anordnungen 1, 2 an das Steuermodul 41 übertragen werden.

Ein weiterer Baustein des Steuermoduls 41 ist ein Mikrocontroller 20, welcher hier eine LED-Stromsteuerung 30 des Steuermodul 41 ansteuert, über die wiederum die LED-Anordnungen 1, 2 in einem Pulsweitenmodulationsverfahren angesteuert bzw. bestromt werden. Z.B. kann die LED-Stromsteuerung 30 eine Einrichtung 31 zur Gesamtstromsteuerung für beide LED-Anordnungen 1, 2 umfassen und eine Einrichtung 32 zur Bestromungsauswahl, d. h. welcher Anteil des Gesamtstroms welcher der LED-Anordnungen 1, 2 zur Verfügung gestellt wird. Über einen Stromschalter 33 wird dann der Gesamtstrom entsprechend phasenweise aufgeteilt. Ein genauer Aufbau, wie eine solche LED-Stromsteuerung 30 realisiert werden kann, wird noch anhand der Figuren 3 bis 5 näher erläutert.

Der Gesamtstrom und der Anteil des Gesamtstroms für die einzelnen LED-Anordnungen 1, 2, wird letztlich vom Mikrocontroller 20 vorgegeben, der die LED-Stromsteuerung 30 ansteuert. Hierzu wird dem Mikrocontroller 20 eine Spektrums-Steuerungsfunktion STK, hier in Form einer zeitabhängigen, insbesondere zirkadianen, Spektrums-Steuerungskurve STK vorgegeben, nach der die Farbtemperatur passend zum Tagesverlauf des Nutzers automatisch geändert wird. Sofern der Benutzer eine solche Funktion mit einer Spektrums-Steuerungskurve STK deaktiviert hat, kann als Spektrums-Steuerungsfunktion auch ein konstant eingestellter Wert dem Mikrocontroller vorgegeben werden (d. h. eine zeitkonstante Funktion), wobei der Wert so lange gilt, bis der Benutzer wieder über eine Taste zur Einstellung der Farbtemperatur, beispielsweise mit einem bestimmten Farbtemperaturregler 11 auf dem Bedienmodul 10 oder einem entsprechenden virtuellen Einstellregler auf der grafischen Benutzerschnittstelle 61 der App des mobilen Endgeräts 60, einen neuen Wert vorgibt. Dies hängt davon ab, welche Funktion der Benutzer eingestellt hat.

Das Dimmen, d. h. das Einstellen der Helligkeit bzw. der Gesamtleistung (letztlich hier den Gesamtstrom), der LED-Anordnungen 1, 2 erfolgt über eine geeignete Dimm-Tastenanordnung 18 (hier symbolisiert durch nur eine Dimm-Taste) auf dem Bedienmodul 10 oder eine entsprechende Funktionalität auf dem mobilen Endgerät 60. Diese Einstellung der Gesamthelligkeit ist (außer ggf. im Boost-Modus) unabhängig von der Einstellung der Farbtemperatur, d. h. auch wenn die Farbtemperatur geändert wird, bleibt doch die Gesamtleistung der LED-Anordnungen 1, 2 gleich. Es wird lediglich die Leistung unterschiedlich auf die LED-Anordnungen 1, 2 verteilt, so dass die aktuell vorgegebene Farbtemperatur erreicht wird.

Es wird an dieser Stelle darauf hingewiesen, dass Figur 2 nur vereinfacht die für die Erfindung wesentlichen Komponenten zeigt und dass zur gesamten Steueranordnung 40 auch noch weitere Komponenten gehören können, zum Beispiel über die Schnittstellen gekoppelte weitere mobile Endgeräte oder PCs. Insbesondere kann die Steuereinrichtung 41 auch noch weitere Komponenten und Baugruppen aufweisen, wie zum Beispiel ein oder mehrere Netzteile, Spannungswandler, gegebenenfalls zusätzliche Speichereinheiten, Schnittstellen, weitere Prozessoren, Anzeigeelemente etc.

Figur 3 zeigt detaillierter ein Schaltbild, mit dem eine solche Steuerung der LED-Anordnungen 1, 2 realisiert werden kann, wobei hier nur der Mikrocontroller 20 mit der Schaltung zur Stromsteuerung gezeigt ist. Bei dem in Figur 3 dargestellten Ausführungsbeispiel wird vom Mikrocontroller 20 jeweils ein PWM-Stromsignal I_{GP} für den LED-Gesamtstrom (im Folgenden PWM-Gesamtstromsignal genannt) und ein PWM-Stromsignal I_{WP} für eine der beiden LED-Anordnungen 1, 2, hier die warmweiße zweite LED-Anordnung 2, erzeugt. Die PWM-Stromsignale sind jeweils logische Steuersignale (mit "0" oder "1"), die den Strom steuern sollen.

Das PWM-Stromsignal I_{WP} für die zweite LED-Anordnung 2 wird ebenso wie das PWM-Gesamtstromsignal I_{GP} einem XOR-Gatter 36 (Exklusiv-Oder-Gatter) zugeführt. Das Ergebnis ist dann ein PWM-Stromsignal I_{KP} für die erste LED-Anordnung 1 mit den kaltweißen LEDs. Dieses PWM-Stromsignal I_{KP} wird auf einen Schalteingang eines ersten Transistors T1, hier ein MOSFET, gegeben. Ein zweiter Transistor T2, hier ebenfalls ein MOSFET, für die zweite, warmweiße LED-Anordnung 2 wird an seinem Schalteingang vom PWM-Stromsignal I_{WP} für die zweite LED-Anordnung 2 angesteuert. Die Schalteingänge der Transistoren T1, T2 (die zusammen hier den Stromschalter 33 bilden) sind hierzu jeweils mit den Signalleitungen der entsprechenden PWM-Stromsignale I_{KP}, I_{WP} sowie über Widerstände R2, R3 mit einem Referenzpotential VR, beispielsweise 5 V, verbunden. Mit Hilfe der Transistoren T1, T2 wird lediglich der Gesamtstrom auf die beiden LED-Anordnungen 1, 2 aufgeteilt.

Der Gesamtstrom der LED-Anordnung und somit die Helligkeit des Leuchtmoduls wird wie erwähnt letztlich durch das PWM-Gesamtstromsignal I_{GP} vorgegeben, welches zunächst vom Mikrocontroller 20 einem logischen Und-Gatter 35 zugeführt wird, dem zusätzlich auch ein logisches Freigabe-Signal PWM_{E} auf einen invertierten Eingang zugeführt wird. Das Freigabe-Signal PWM_{E} wird so vom Mikrocontroller 20 ausgegeben, dass nur dann das logische PWM-Gesamtstromsignal I_{GP} am Ausgang des Und-Gatter 35 entsprechend ausgegeben wird, wenn der Mikrocontroller sicher in einen definierten Zustand hochgefahren wurde. Das vom Und-Gatter 35 kommende PWM-Gesamtstromsignal I_{GP} wird dann auf einen Eingang (im Folgenden auch "Dimm-Eingang" genannt) einem Stromregler 34, hier einem Step-Down-Regler-Baustein 34, beispielsweise vom Typ LM3406, zugeführt, mit dem der vom PWM-Gesamtstromsignal I_{GP} vorgegebene Gesamtstrom durch die LED-Anordnungen 1, 2 geregelt werden kann. Hierzu sind in üblicher Weise am Ausgang des Step-Down-Regler-Bausteins 32 eine Freilaufdiode D1 gegen Masse und eine Induktivität L1 zwischen dem Ausgang des Step-Down-Regler-Bausteins 34 und den Anodenanschlüssen der LED-Anordnungen 1, 2, welche parallel geschaltet sind, geschaltet.

Parallel zu den LED-Anordnungen 1, 2 sind hier zudem zwei Freilaufdioden D2, D3 geschaltet, um Spannungsspitzen an den LEDs zu vermeiden. Kathodenseitig sind die LED-Anordnungen 1, 2 mit den bereits genannten Transistoren T1, T2 verbunden. Auf der anderen Seite sind die Transistoren T1, T2 jeweils über einen gemeinsamen Widerstand R4 mit Masse verbunden. Dieser Widerstand R4 dient zur Gesamtstrommessung. Der dort ermittelte Stromwert wird als Ist-Wert dem Step-Down-Regler-Baustein 34 zugeführt (in Figur 3 nicht dargestellt).

Wie aus dem Schaltbild in Figur 3 zu ersehen ist, wird das PWM-Stromsignal I_{WP} für die zweite LED-Anordnung 2 nicht unmittelbar zum Transistor T2 geleitet, sondern über eine Schaltungsanordnung, bestehend aus einer Diode D4, einem dazu parallel geschalteten Widerstand R1, einem nachfolgenden Schmitt-Trigger 37 und einem zwischen der Diode D4 und dem Widerstand R1 einerseits und dem Schmitt-Trigger 37 andererseits gegen Masse geschalteten Kondensator C1. Diese Bausteine bilden zusammen eine Verzögerungsschaltung. Wenn vom Mikrocontroller 20 als PWM-Stromsignal I_{WP} für die zweite LED-Anordnung 2 eine "1" ausgegeben wird, wird über die Diode D4 der Kondensator C1 schlagartig aufgeladen und der entsprechende Transistor T2 wird relativ schnell geschaltet und folglich der Strom durch die zweite LED-Anordnung 2 schnell hochgefahren. Gibt andererseits der Mikrocontroller 20 als PWM-Stromsignal I_{WP} für die zweite LED-Anordnung 2 eine "0" aus, um den Strom durch die zweite LED-Anordnung 2 wieder abzuschalten, so muss der Kondensator C1 zunächst über den Widerstand R1 verzögert entladen werden und der Schmitt-Trigger 37 schaltet als Komparator erst ab einem vorgegebenen Schwellenwert an seinem Ausgang wieder um. Dies sorgt für eine Verzögerung bei der Abschaltung um ca. 10 µs.

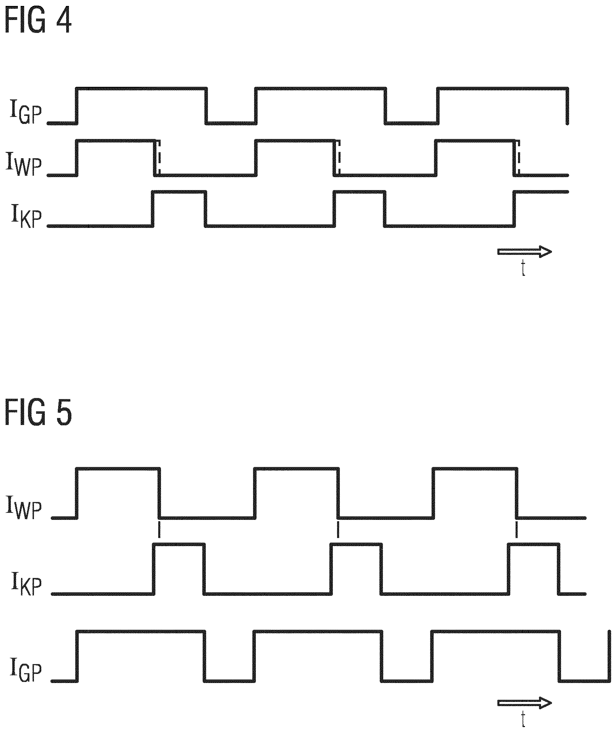

Ein Pulsdiagramm der PWM-Stromsignale IG_{P}, I_{WP} , I_{KP} bei dieser Schaltungsanordnung ist in Figur 4 dargestellt. Das obere Pulsdiagramm zeigt das vom Mikrocontroller ausgegebene PWM-Gesamtstromsignal I_{GP} und das mittlere Pulsdiagramm das PWM-Stromsignal I_{WP} für die warmweiße, zweite LED-Anordnung 2. Das untere Pulsdiagramm zeigt das durch den logischen Baustein 36 daraus generierte PWM-Stromsignal I_{KP} für die kaltweiße, erste LED-Anordnung 1. Dargestellt ist jeweils der Schaltzustand über der Zeit. Durch die gestrichelte absteigende Flanke an den Pulsen des PWM-Stromsignals I_{WP} für die warmweiße, zweite LED-Anordnung 2 wird die verzögerte Weiterleitung zum Transistor T2 symbolisiert, so dass beim Abschalten des Stroms für die warmweiße LED-Anordnung 2 bereits kurzfristig vorher das PWM-Stromsignal I_{KP} für die kaltweiße LED-Anordnung 1 hochgeschaltet wird, d. h. dass sich diese Signale überlappen. Da gleichzeitig der Gesamtstrom konstant bleibt, wie dies in der oberen Kurve dargestellt ist, bedeutet dies, dass der Strom der warmweißen LED-Anordnung 2 heruntergefahren wird, während gleichzeitig der Strom für die kaltweiße LED-Anordnung 1 hochgefahren wird.

In einem alternativen, nicht dargestellten Aufbau kann auch vom Mikrocontroller direkt jeweils ein PWM-Stromsteuerungssignal für den Strom der kaltweißen und der warmweißen LED-Anordnungen generiert werden. Dabei kann dafür gesorgt werden, dass der Strom der warmweißen LED-Anordnung 2 erst ausgeschaltet werden kann, nachdem der Strom für die kaltweiße LED-Anordnung 1 eingeschaltet ist und sich der Gesamtstrom auf beide Zweige aufgeteilt hat. Hierzu kann über eine logische Oder-Verknüpfung (die beispielsweise einfach mit zwei Dioden und einem Widerstand erzeugt werden kann) ein PWM-Stromsignal I_{GP} für den gemeinsamen LED-Gesamtstrom erzeugt werden, das dann wiederum auf den Dimm-Eingang des LED-Stromreglers (d. h. den Step-Down-Regler) gegeben werden kann. Hier kann dann der LED-Strom wieder über Transistoren auf die kaltweiße und warmweiße LED-Anordnung 1, 2 umgeschaltet werden. Ein entsprechendes Diagramm dieser PWM-Stromsignale I_{GP}, I_{WP} , I_{KP} ist alternativ in Figur 5 dargestellt. Hier zeigt das obere Diagramm das vom Mikrocontroller ausgegebene PWM-Stromsignal I_{WP} für die warmweiße LED-Anordnung 2, das mittlere Diagramm das ebenfalls vom Mikrocontroller ausgegebene PWM-Stromsignal I_{KP} für die kaltweiße LED-Anordnung 1 und das untere Diagramm das aus den beiden oberen Kurven über eine Oder-Verknüpfung erzeugte PWM-Gesamtstromsignal I_{GP}, welches auf den Dimm-Eingang des Reglers gegeben wird.

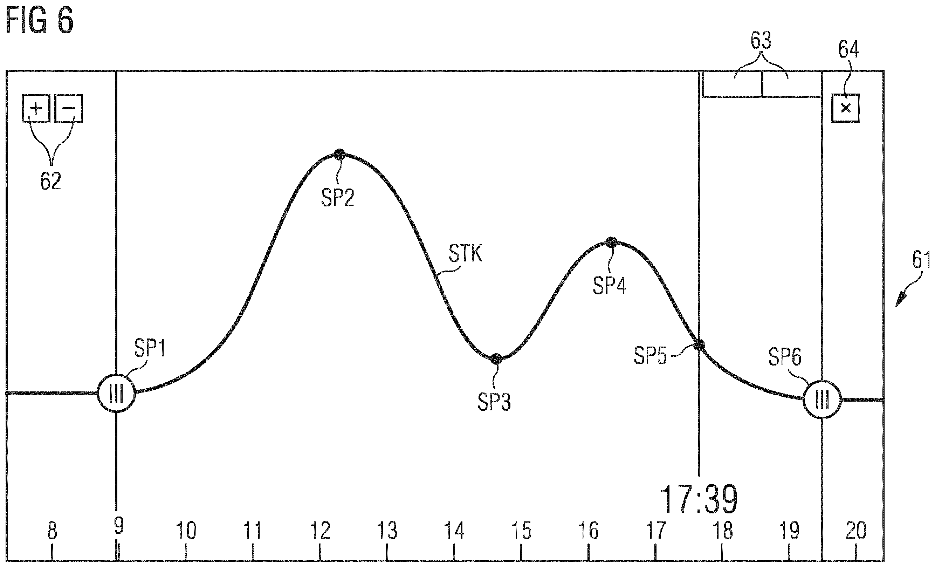

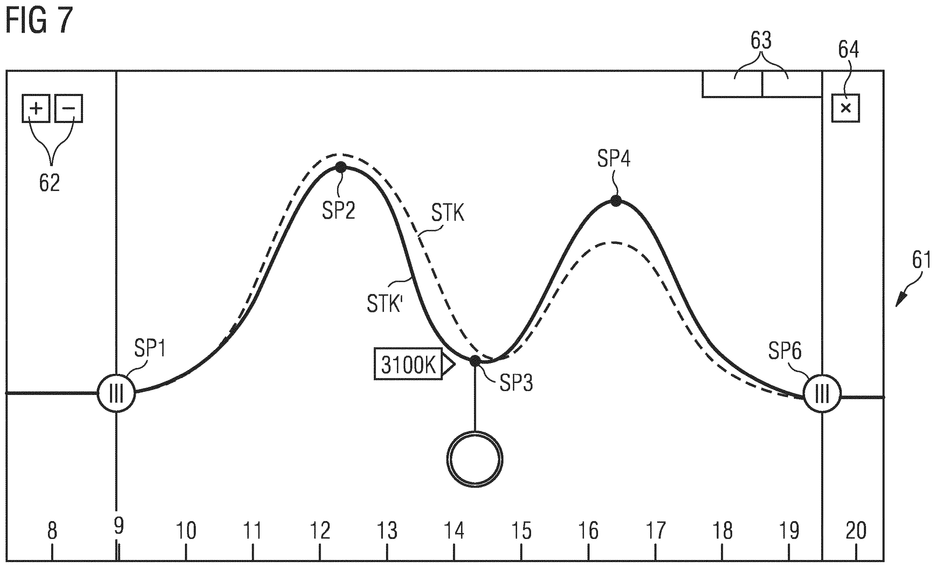

Anhand der Figuren 6 und 7 wird im Folgenden erläutert, wie mit Hilfe einer grafischen Benutzerschnittstelle 61, beispielsweise mittels einer App auf einem mobilen Endgerät 60 als Spektrums-Steuerungsfunktion STK eine zirkadiane zeitabhängige Spektrums-Steuerungskurve STK für den Mikrocontroller 20 erzeugt werden kann. In Abhängigkeit von dieser zirkadianen Spektrums-Steuerungskurve STK wird über den Tag hinweg das Gesamtlichtspektrum bzw. die Gesamtlich-Farbtemperatur des von dem Leuchtmodul 51 der LED-Leuchte 100 abgestrahlten Lichts festgelegt.

Wird die betreffende App vom Nutzer auf dem mobilen Endgerät 60 aufgerufen, so wird, wie in Figur 6 dargestellt, die aktuelle Spektrums-Steuerungskurve STK über der Zeit auf dem Touch-Display des Endgeräts 60 dargestellt. Aufgetragen ist hier in der Spektrums-Steuerungskurve STK jeweils die Farbtemperatur des Gesamtlichts des anzusteuernden Leuchtmoduls 51 der LED-Leuchte 100 über der Zeit. Bei einem Drehen des mobilen Endgeräts 60 wird in üblicher Weise auch die Darstellung mitgedreht, so dass die Zeitachse immer unten liegt. Die Zeitskala ist unten dargestellt. Die Farbtemperatur steigt von unten nach oben an. Sie beginnt unten bei ca. 2700 K (warmweißes Licht) und geht nach oben bis ca. 6500 K (kaltweißes Licht).

Über Zoom-Tasten 62 kann der Ausschnitt vergrößert oder verkleinert werden. Alternativ ist auch ein Zoomen mit den üblichen Gestiken auf dem Touch-Display möglich (beispielsweise Auseinanderziehen der Finger oder Zusammenschieben der Finger etc.). Außerdem sind hier auch Umschalttasten 63 dargestellt, falls mit der App verschiedene LED-Leuchten bzw. verschiedene unabhängige Leuchtmodule mit eigenen unabhängigen Spektrums-Steuerungskurven angesteuert werden sollen. Über eine Taste 64 kann das aktuelle Fenster oder die App geschlossen werden. Es wird in diesem Zusammenhang darauf hingewiesen, dass der Begriff "Taste" so zu verstehen ist, dass es sich um virtuelle Tasten handelt, so dass bei der Berührung des Bildschirms an dieser Stelle die jeweilige Funktion ausgelöst wird.

Wie hier zu sehen ist, wird die Spektrums-Steuerungskurve STK durch mehrere Stützpunkte SP1, SP2, ... SP6 definiert. An jedem der Stützpunkte SP1, SP2, ... SP6 ist für den betreffenden Zeitpunkt ein genauer Farbtemperaturwert (z. B. der Mittelwert oder das Maximum des Gesamtlichtspektrums) hinterlegt Diese Stützpunkte SP1, SP2, ... SP6 werden entweder, wie dies später noch erläutert wird, zunächst für eine Start-Spektrums-Steuerungskurve festgelegt. Sie können aber auch vom Benutzer einzeln vorgegeben oder verändert werden, wie dies anhand von Figur 7 noch erklärt wird. In Figur 6 sind nur sechs solcher Stützpunkte dargestellt. Es können auch mehr Stützpunkte zur Festlegung einer Kurve genutzt werden, beispielsweise zwölf oder vierundzwanzig Stützpunkte über den Tag verteilt. Die Spektrums-Steuerungskurve STK wird dann als, ggf. abschnittsweise, Interpolationsfunktion, beispielsweise als Spline, durch diese Stützpunkte gelegt.

Wenn ein Benutzer einen der Stützpunkte SP1, SP2, ... SP6 berührt, so wird der zugehörige Zeitwert vergrößert dargestellt und der Stützpunkt SP5 beispielsweise durch eine Linie oder dergleichen markiert. Der erste Stützpunkt SP1 ist hier gleichzeitig ein Stützpunkt, mit dem vorgegeben wird, dass zu diesem Zeitpunkt das Leuchtmodul 51 eingeschaltet wird. Dies ist in dem in Figur 6 dargestellten Beispiel um 9 Uhr morgens. Der letzte Stützpunkt ist entsprechend ebenfalls ein Zeitpunkt, zu dem das Leuchtmodul 51 wieder ausgeschaltet wird. Dies ist hier der Zeitpunkt 19:30 Uhr.

Wie aus Figur 7 zu ersehen ist, kann der Nutzer durch Veränderung der Stützpunkte SP1, SP2, ... SP6 auch die Spektrums-Steuerungskurve STK verändern. Gezeigt ist hier die ursprüngliche Spektrums-Steuerungskurve STK wie in Figur 6 sowie eine durch die Verschiebung der Stützpunkte SP2, SP3 und SP4 sowie Entfernen des fünften Stützpunkts SP5 erzeugte neue Spektrums-Steuerungskurve STK'. Wie hier gezeigt ist, können die Stützpunkte SP1, SP2, ... SP6 in zwei Richtungen verschoben werden, nämlich einfach nur in der Farbtemperaturrichtung, d. h. senkrecht zur Zeitachse, wie dies bei den Stützpunkten SP2, SP4 der Fall ist. Ebenso ist auch ein Verschieben entlang der Zeitachse möglich, wie dies beim dritten Stützpunkt SP3 der Fall ist. Beim Berühren des Stützpunkts (vorzugsweise reagiert der Touchscreen so, dass der Benutzer knapp unterhalb des Stützpunkts die Kurve berührt, um den Stützpunkt selber nicht zu verdecken) wird ein vergrößerter Stützpunkt darunter dargestellt, an dem der Benutzer mit seinem Finger den Stützpunkt gut führen kann. Außerdem kann beispielsweise der aktuelle Farbtemperaturwert angezeigt werden, wie hier 3200 K (also noch im warmweißen Bereich) beim Stützpunkt SP3.

Sofern der Benutzer einen Lernmodus eingestellt hat, wird zusätzlich die Veränderung der Spektrums-Steuerungskurve STK, d. h. die Verschiebung der Stützpunkte SP1, SP2, ... SP6, registriert und abgespeichert. Dies kann sowohl in der App, d.h. im Speicher des mobilen Endgeräts, als auch im Mikrocontroller 20 bzw. im zugehörigen Speicher 21 des Mikrocontrollers 20 im Steuermodul 41 (siehe Figur 2) der LED-Leuchte selber erfolgen. Bei einem erneuten Durchlauf der Spektrums-Steuerungskurve, beispielsweise am nächsten Tag, kann die vom Nutzer am Vortag eingefügte Veränderung der Kurve berücksichtigt werden, jedoch vorzugsweise nur um einen reduzierten Teil, beispielsweise um 30 %. Wenn der Benutzer an drei Tagen hintereinander die gleiche oder ähnliche Änderung vornimmt, führt dies zu einer veränderten Kurve in der gewünschten Form. Alternativ kann der Nutzer natürlich auch einen Modus einstellen, in dem die Änderungen sofort als fix übernommen werden und nicht nur als individuell für diesen Tag genommene Änderung, die dann ggf. im Lernmodus berücksichtigt wird.

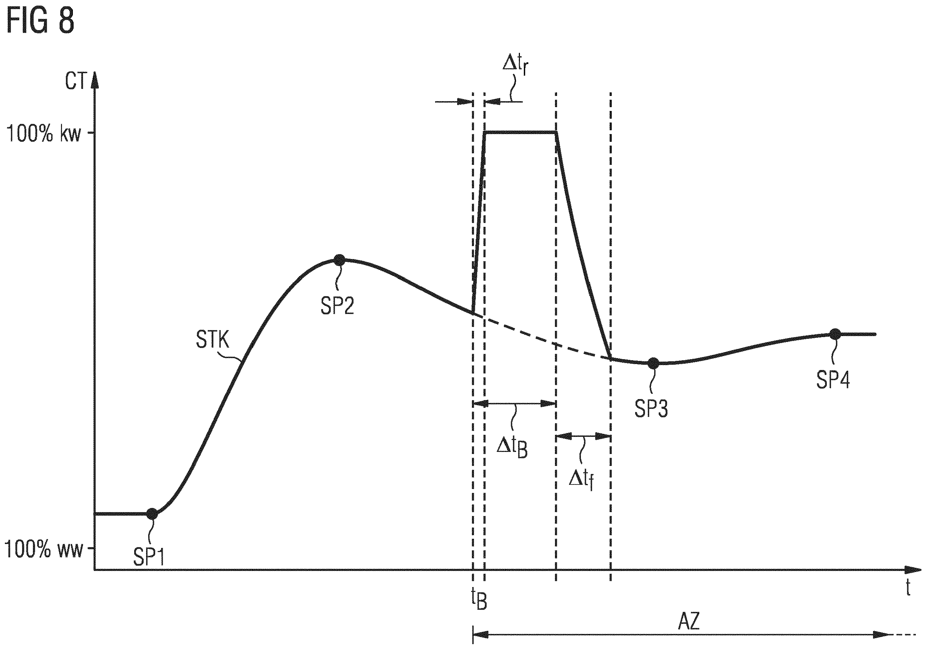

Figur 8 zeigt ein Beispiel, wie die Farbtemperatur CT bei Einschalten des Boost-Modus temporär geändert wird, d. h. wenn der Benutzer eine Boost-Taste zur Aussendung eines Kurzzeitdosisveränderungssignals DHS, hier eines Dosiserhöhungssignal (DHS), betätigt.

In analoger Weise könnte aber auch eine Veränderung zur Erhöhung des Warmlichtanteils für eine temporäre Entspannungsphase erfolgen. Auf der Hochachse ist in Figur 8 die Farbtemperatur CT als Anteil des kaltweißen Lichts kw (also Licht der ersten LED-Anordnung 1) oder warmweißen Lichts ww (also Licht der ersten LED-Anordnung 1) in % angegeben.

Eine Boost-Taste 15 befindet sich beispielsweise auf dem Bedienmodul 10 der LED-Leuchte 100 (siehe Figuren 1 und 2). Eine entsprechende virtuelle Taste kann auch von der App auf der grafischen Benutzeroberfläche 61 des tragbaren Endgeräts 60 zur Verfügung gestellt werden. Ohne Drücken einer solchen Boost-Taste würde normalerweise die Steuerung der Farbtemperatur des LED-Leuchtmoduls 51 gemäß der in der Figur 8 dargestellten Spektrums-Steuerungskurve erfolgen, die wiederum durch Stützpunkte SP1, SP2, ...SP4 über der Zeit t definiert ist. Zu einem beliebigen Zeitpunkt t_{B} beschließt der Benutzer jedoch, dass er bezüglich des Lichts eine Auffrischung benötigt. Nach Drücken der Boost-Taste wird in einer relativ kurzen Anstiegszeit Δtᵣ von vorzugsweise ca. einer Sekunde dafür gesorgt, dass die kaltweiße LED-Anordnung 1 auf die maximale Leistung, d. h. mit 100 % Leistung, hochgefahren wird (wogegen im normalen Betriebsmodus zum Beispiel die Gesamtleistung maximal 80% der möglichen Leistung beträgt). Mit anderen Worten, 100 % des zur Verfügung stehenden Stroms werden dafür aufgewendet, um die erste LED-Anordnung 1 zu betreiben. Die warmweiße LED-Anordnung 2 wird in dieser Zeit überhaupt nicht mit Strom versorgt. Damit liegt auch die Farbtemperatur CT bei 100% kw. Dies führt dazu, dass ein maximaler Blauanteil (im Bereich um 450 nm) ausgesendet wird, durch den der Melatonin-Ausstoß des Benutzers kurzfristig reduziert und damit die Wirkung des eher erfrischenden Glückshormons Serotonin erhöht werden kann. Die LED-Leuchte bzw. das Leuchtmodul ist bevorzugt so aufgebaut, dass die Beleuchtungsstärke dann bei mindestens bei 80 lux liegt, besonders bevorzugt aber höher, beispielsweise bei ca. 200 Ix. Diese Leistungssteigerung der kaltweißen LEDs und Farbverschiebung auf den maximalen Blauanteil erfolgt jedoch nur für eine begrenzte Boost-Zeitspanne Δt_{B} von beispielsweise 10 Min. Anschließend wird in einer nachfolgenden Rückstellung-Zeitspanne Δt_{f} die Leistung der kaltweißen LED-Anordnung 1 und die Leistung der warmweißen LED-Anordnung 2 wieder so eingestellt, dass das Gesamtlichtspektrum den Farbtemperaturwert der Steuerungskurve STK zum dann vorliegenden Zeitpunkt erreicht. Nachfolgend wird dann das LED-Leuchtmodul 51 wieder ganz normal gemäß der Spektrums-Steuerungskurve STK betrieben.

Wie durch die gestrichelte Darstellung der Spektrums-Steuerungskurve STK innerhalb der Boost-Zeitspanne Δt_{B} dargestellt ist, wird normalerweise die Spektrums-Steuerungskurve STK hierdurch nicht beeinflusst. Es ist aber prinzipiell möglich, dass auch die Einschaltung des Boost-Modus zu diesem Zeitpunkt gespeichert wird und dies in ähnlicher Weise in eine langfristige Veränderung der Steuerungskurve über mehrere Tage hinweg eingeht, wenn der Benutzer an mehreren Tagen hintereinander etwa zur gleichen Zeit die Boost-Taste betätigt, da dies darauf hinweist, dass die Spektrums-Steuerungskurve nicht optimal für den Nutzer eingestellt ist und er um diese Tageszeit generell etwas mehr Blaulicht benötigt.

Mit dem Drücken der Boost-Taste zum Zeitpunkt t_{B} wird außerdem ein Überwachungszähler ausgelöst, der zumindest eine Akzeptanzzeitspanne AZ lang mitläuft. Während dieser Zähler läuft, wird mitgezählt, wie oft der Benutzer die Boost-Taste drückt, und es ist im Mikrocontroller hinterlegt, dass innerhalb der Akzeptanzzeitspanne AZ eine bestimmte Anzahl von Boost-Zeitspannen Δt_{B} vorhanden sein dürfen, beispielsweise dass der Benutzer innerhalb von vier Stunden nur zweimal den Boost-Modus nutzen kann. Schaltet der Nutzer innerhalb von vier Stunden ein drittes Mal den Boost-Modus ein, so hat dies keine Wirkung.

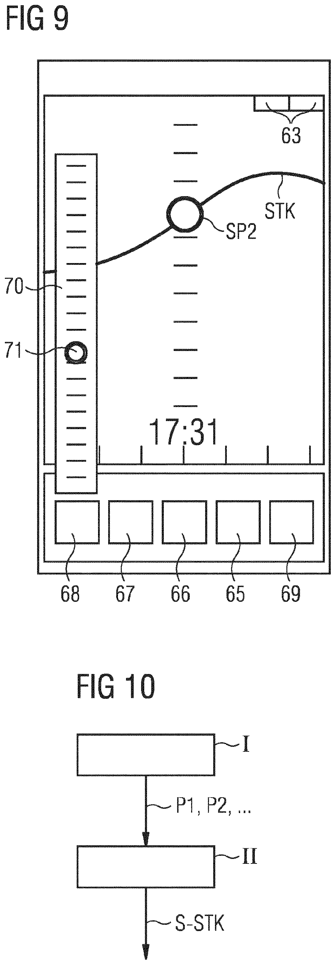

Figur 9 zeigt, diesmal in Hochkant-Darstellung, eine weitere Bedienoberfläche (ein anderes Fenster bzw. ein Menü) der App zur Steuerung der LED-Leuchte auf einem mobilen Endgerät 60. Hier sind unter einem Ausschnitt der Steuerungskurve STK innerhalb einer sog. "Toolbar" mehrere virtuelle Tasten 65, 66, 67, 68, 69 dargestellt. Diese Toolbar kann beispielsweise aufgerufen werden, indem der Nutzer bei eingeschalteter App und dargestellter Spektrums-Steuerungskurve vom Rand ausgehend mit dem Finger nach oben über den Bildschirm fährt, um die Toolbar aus dem Seitenrand "herauszuziehen". Diese Toolbar enthält zum einen eine Menütaste 69, mit der ein Hauptmenü und darunter weitere Funktionen (bzw. Fenster) eingeschaltet werden können, beispielsweise ein Fenster zum Aufruf eines Initialisierungsmodus, um zunächst eine möglichst gut angepasste individuelle Start-Spektrums-Steuerungskurve für den Nutzer anzulegen. Die Toolbar umfasst zudem eine Boost-Taste 65 zur Auslösung des zuvor erläuterten Boost-Modus. Außerdem ist hier eine Ein/Aus-Taste 66 vorgesehen. Mit einer weiteren Taste 67 kann eingestellt werden, ob bei einer Verschiebung des zum aktuellen Zeitpunkt sichtbaren Stützpunkts auf der Steuerungskurve tatsächlich die Steuerungskurve STK verstellt wird oder ob dies nur eine kurzzeitige individuelle Anpassung der Steuerungskurve für diesen einen Tag sein soll. Über eine virtuelle Dimm-Taste 68 wird ein virtueller Dimm-Regler 70 geöffnet.

Auf diesem kann ein virtueller Punkt 71 verfahren werden, um so die Helligkeit des LED-Leuchtmoduls zu variieren, parallel zur Möglichkeit, eine entsprechende Dimmer-Regelung im Bedienmodul 10 an der LED-Leuchte 100 zu nutzen.

Die besagte App kann auf übliche Weise, beispielsweise aus dem Internet, auf das mobile Endgerät 60 heruntergeladen werden. Mit Hilfe dieser App ist es auch möglich, das Endgerät 60 über die drahtlose Schnittstelle mit der LED-Leuchte 100 zu koppeln, beispielsweise indem in üblicher Weise ein Suchmodus eingestellt wird und gleichzeitig auch an der LED-Leuchte ein Suchmodus eingestellt wird und bei einem Auffinden der Geräte dann noch jeweils ein Bestätigungssignal in der App und/oder dem Bedienmodul der LED-Leuchte gegeben werden kann, um die Kopplung zu vollziehen. Auch wäre eine Kopplung mittels einer Nahfeldkommunikations-Schnittstelle oder das Einlesen eines Scancodes an der LED-Leuchte denkbar. Weiterhin kann, insbesondere auch über verschiedene Menüpunkte der App, vorgegeben werden, was passiert, wenn ein gekoppeltes mobiles Endgerät aus dem Empfangsbereich der LED-Leuchte entfernt wird und was passiert, wenn dieses Endgerät dann wieder in den Empfangsbereich zurückkehrt. Beispielsweise könnte in einem Eco-Modus dafür gesorgt werden, dass bei Entfernung des Endgeräts aus dem Empfangsbereich der LED-Leuchte automatisch das LED-Leuchtmodul abgeschaltet oder auf ein Minimum heruntergedimmt wird und automatisch eine Wiederaufnahme der Verbindung und ein Hochfahren des LED-Leuchtmoduls erfolgt, sobald sich das Endgerät wieder im Empfangsbereich befindet etc.

Figur 10 zeigt schließlich noch einen Ablaufplan, wie beispielsweise bei einer erstmaligen Benutzung einer LED-Leuchte durch einen Benutzer für diesen Benutzer eine individuelle Start-Spektrums-Steuerungskurve S-STK erzeugt werden kann. Hierzu wird von der App dem Benutzer nach der Kopplung bzw. Auswahl oder Bestätigung der Kopplung mit der LED-Leuchte angeboten, einen Initialisierungsmodus durchzuführen. Wird dies vom Nutzer akzeptiert, so werden innerhalb eines ersten Initialisierungsschritts I verschiedene benutzerspezifische Parameter P1, P2, ... abgefragt. Dabei erfolgt keine Abfrage, zu welchen Zeiten genau welche Stützpunkte mit welchen Werten gesetzt werden, sondern stattdessen werden benutzerverhaltensspezifische Parameter abgefragt, wie die Uhrzeit des Arbeitsbeginns, die Uhrzeit des Arbeitsendes, die Zeit und Dauer der Pausen. Insbesondere gehört hierzu aber auch eine rein benutzergefühlsspezifische Parameterabfrage, nämlich die Abfrage der Zeit der höchsten Leistungsbereitschaft, indem der Benutzer danach gefragt wird, in welchen fünf aufeinanderfolgenden Stunden er seine Arbeitszeit legen würde, sofern er diese frei bestimmen könnte, sowie eine Abfrage einer Stunde, in der er seinem Gefühl nach die höchste Leistungsbereitschaft hat.

Auf Basis dieser Parameter P1, P2, ... wird dann in einem nachfolgenden Kurven-Ermittlungsschritt II die Start-Spektrums-Steuerungskurve S-STK berechnet. Beispielsweise könnte dann die Start-Spektrums-Steuerungskurve S-STK so gewählt sein, dass der Beginn der Kurve 30 min vor Arbeitsbeginn liegt und die Kurve einen 60 % Kaltweiß-Anteil aufweist. Ebenso kann das Ende der Kurve 30 min nach Arbeitsende liegen, mit einem 0 % Kaltweiß-Anteil. Eine Stunde vor Arbeitsende könnte ein Stützpunkt liegen, der noch 20 % Kaltweiß-Anteil enthält. Um die Pausen herum werden weitere Stützpunkte gelegt. Beispielsweise könnte ein Stützpunkt 30 min vor der Mittagspause gesetzt werden mit 40 % Kaltweiß-Anteil, zur und während der Mittagspause wird der Kaltweißanteil dann auf 20 % gelegt und zum Ende der Mittagspause sowie 30 min nach der Mittagspause werden zwei Stützpunkte mit 80 % Kaltweiß-Anteil gesetzt. Zusätzlich könnten Stützpunkte mit 70 % Kaltweiß-Anteil für alle Zeitpunkte im Zeitraum der gewählten höchsten Leistungsbereitschaft gewählt werden, die nicht durch Pausen oder Arbeitsende beeinflusst sind, wobei die eine Stunde der besonders höchsten Leistungsbereitschaft einen 90 % Kaltweiß-Anteil erhält. Die Stützpunkte, welche aufgrund der frei wählbaren höchsten Leistungsbereitschaft gesetzt werden, werden dabei so gesetzt, dass sie nicht die durch die externen Vorgaben gewählten Pausen oder das Arbeitsende beeinflussen.

Diese Start-Spektrums-Steuerungskurve S-STK kann dann vom mobilen Endgerät 60 über die drahtlose Schnittstelle an das Steuermodul bzw. den Mikrocontroller 20 im Steuermodul 41 der LED-Leuchte 100 übertragen werden. Dabei reicht es aus, wenn die Liste der Stützpunkte übertragen wird. Parallel können der Mikrocontroller und die App die gleiche Interpolationsfunktion als Spektrums-Steuerungskurve berechnen. Vom Mikrocontroller können die Koeffizienten eines Polynoms n-ter Ordnung für die Interpolationsfunktion hinterlegt werden. Durch einfache Multiplikationsprozesse kann dann der Mikrocontroller 20 zu jedem Zeitpunkt den passenden Wert der Kurve schnell berechnen und entsprechende PWM-Stromsteuerungssignale ausgeben, wie dies bereits anhand der Figuren 1 bis 5 erläutert wurde.

Erfolgt eine Veränderung der Spektrums-Steuerungskurve mit Hilfe des mobilen Endgeräts, werden über die drahtlose Schnittstelle die neuen Stützstellen wieder an den Mikrocontroller des Steuermoduls der LED-Leuchte übertragen, der dann ebenfalls die neuen Koeffizienten berechnet und hinterlegt. Vorzugsweise kann der Nutzer auch jederzeit eine Nutzung der Spektrums-Steuerungskurve ausschalten und dazu übergehen, die Spektrums-Steuerungsfunktion für den nächsten Zeitraum konstant zu halten und z. B. über einen einfachen Schieberegler die Farbtemperatur einzustellen, wobei dann der Mikrocontroller diesen konstanten Wert hält. Auch in diesem Fall ist es möglich, die Boost-Funktion zu wählen und anschließend wieder auf den vorgegebenen konstanten Wert gemäß der Spektrums-Steuerungsfunktion zurückzukehren.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere ist es wie erwähnt möglich, dass die LED-Leuchte nicht nur zwei LED-Anordnungen mit unterschiedlichen Lichtspektren, sondern gegebenenfalls auch mehr als zwei unterschiedliche LED-Anordnungen mit verschiedenen Lichtfarben bzw. Spektren aufweist, insbesondere auch beliebige farbige LEDs, beispielsweise - aber nicht abschließend - amberfarbene, blaue, rote, gelb-rote und/oder grüne LEDs. Dabei könnten auch z. B. eine oder mehrere zusätzliche LED-Anordnungen vorgesehen sein, die nur im Boost-Modus zugeschaltet werden, um die erste LED-Anordnung in ihrer Wirkung zu verstärken. Wenn die LED-Leuchte mehrere voneinander unabhängige Leuchtköpfe bzw. Leuchtmodule aufweist, können die verschiedenen LED-Anordnungen auch auf diese verteilt sein, d. h. sich in verschiedenen Leuchtköpfen bzw. Leuchtmodulen befinden. Insbesondere wenn mehrere Leuchtköpfe bzw. Leuchtmodule in unterschiedliche Richtungen in Licht abstrahlen, können diese z. B. auch jeweils mehrere LED-Anordnungen aufweisen und/oder unabhängig voneinander nach dem erfindungsgemäßen Verfahren gesteuert werden, auch unabhängig voneinander mit verschiedenen Spektrums-Steuerungsfunktionen (beispielsweise mit unterschiedlichen zirkadianen Variationen) und auch mit voneinander getrennt auslösbaren Boost-Modi betrieben werden. Zudem können die oben beschriebenen besonderen Merkmale der Varianten auch miteinander kombiniert werden. Weiterhin schließt die Verwendung der unbestimmten Artikel "ein" bzw. "eine" nicht aus, dass die betreffenden Merkmale auch mehrfach vorhanden sein können.

### Bezugszeichenliste

1 erste LED-Anordnung
2 zweite LED-Anordnung
10 Bedienmodul
11 Farbtemperaturregler
15 Kurzzeitdosisveränderungs-Schnittstelle / Boost-Taste
18 Dimm-Tastenanordnung
20 Mikrocontroller
21 Speicher
30 LED-Stromsteuerung
31 Einrichtung zur Gesamtstromsteuerung
32 Einrichtung zur Bestromungsauswahl
33 Stromschalter
34 Stromregler / Step-Down-Regler-Baustein
35 Und-Gatter
36 XOR-Gatter
37 Schmitt-Trigger
40 Steueranordnung
41 Steuereinrichtung / Steuermodul
42 drahtlose Schnittstelle / Bluetooth-Schnittstelle
43 Steckerschnittstelle / USB-Schnittstelle
50 Leuchtkopf
51 Leuchtmodul
60 mobiles Endgerät / Smartphone
61 grafische Benutzerschnittstelle
62 Zoom-Tasten
63 Umschalttasten
64 Taste
69 Menütaste
65 Kurzzeitdosisveränderungs-Schnittstelle / Boost-Taste
66 Ein/Aus-Taste
67 Taste
68 Dimm-Taste
70 Dimm-Regler
71 Punkt
100 LED-Leuchte / Tischleuchte
DHS Kurzzeitdosisveränderungssignal / Dosiserhöhungssignal
STK Spektrums-Steuerungsfunktion / Spektrums-Steuerungskurve
STK geänderte Spektrums-Steuerungskurve
SP1, SP2, ... SP6 Stützpunkte
I_{GP} PWM-Gesamtstromsignal
I_{WP} PWM-Stromsignal der zweiten LED-Anordnung
I_{KP} PWM-Stromsignal der ersten LED-Anordnung
PWM_{E} Freigabesignal
C1 Kondensator
D1, D2, D3 Freilaufdioden
D4 Diode
L1 Induktivität
R1, R2, R3, R4 Widerstände
T1, T2 Transistoren
VR Referenzpotential
t Zeit
CT Farbtemperatur
ww warmweiß
kw kaltweiß
t_{B} Zeitpunkt
Δtᵣ Anstiegszeit
Δt_{B} Dosisveränderungs-Zeitspanne / Boost-Zeitspanne
Δt_{f} Rückstellungs-Zeitspanne
AZ Akzeptanzzeitspanne
I Initialisierungsschritt
II Kurven-Ermittlungsschritt
benutzerspezifische Parameter P1, P2, ...
S-STK Start-Spektrums-Steuerungskurve

## Patentansprüche

1. Verfahren zur Ansteuerung einer LED-Leuchte (100), welche zumindest eine erste LED-Anordnung (1) und eine zweite LED-Anordnung (2) umfasst, wobei die erste LED-Anordnung (1) und die zweite LED-Anordnung (2) im Betrieb Licht mit unterschiedlichen Lichtspektren aussenden und dabei vorzugsweise die erste LED-Anordnung (1) einen höheren Blaulichtanteil aussendet als die zweite LED-Anordnung (2),
wobei die Anteile des von der ersten LED-Anordnung (1) und der zweiten LED-Anordnung (2) ausgesendeten Lichts innerhalb eines Gesamtlichtspektrums der LED-Anordnungen (1, 2) gemäß einer vorgegebenen zeitabhängigen, vorzugsweise zirkadianen, Spektrums-Steuerungskurve (STK) gesteuert werden,
**dadurch gekennzeichnet, dass**
bei Empfang eines Veränderungssignals von einer Benutzerschnittstelle zur manuellen Veränderung der Spektrums-Steuerungskurve für einen aktuellen Zeitpunkt die Spektrums-Steuerungskurve (STK) lokal modifiziert wird und diese lokale Modifikation zumindest teilweise bei einem nachfolgenden erneuten Durchlauf der Spektrums-Steuerungskurve (STK) automatisch berücksichtigt wird.

2. Verfahren nach Anspruch 1, wobei eine lokale Modifikation der Spektrums-Steuerungskurve (STK) bei einem nachfolgenden Durchlauf der Spektrums-Steuerungskurve (STK) zu einem vordefinierten Anteil, vorzugsweise ca. 30 %, übernommen wird.

3. Verfahren nach Anspruch 1 oder 2, wobei die zumindest teilweise Übernahme der lokalen Modifikation der Spektrums-Steuerungskurve (STK) bei einem nachfolgenden Durchlauf nur erfolgt, wenn ein Lernmodus einer Steueranordnung (40) der LED-Leuchte (100) aktiviert ist

4. Verfahren nach einem der vorstehenden Ansprüche, wobei für die Spektrums-Steuerungskurve (STK) zu verschiedenen Zeitpunkten jeweils Stützstellenwerte als Stützpunkte (SP1, SP2, ..., SP5) vorgegeben werden und auf Basis dieser Stützpunkte (SP1, SP2, ..., SP5) eine Interpolationsfunktion als Spektrums-Steuerungskurve (STK) ermittelt wird.

5. Verfahren nach einem der vorstehenden Ansprüche, wobei eine Veränderung der Spektrums-Steuerungskurve (DHS) durch Hinzufügen und/oder Entfernen und/oder Verändern von Stützpunkten (SP1, SP2, ..., SP5) erfolgt.

6. Verfahren nach einem der vorstehenden Ansprüche, wobei die Spektrums-Steuerungsfunktion (STK) und/oder die Stützpunkte (SP1, SP2, ..., SP5) auf einer grafischen Benutzerschnittstelle (61) grafisch ausgegeben und mit Hilfe der grafischen Benutzerschnittstelle (61) veränderbar sind.

7. Verfahren nach einem der vorstehenden Ansprüche, wobei eine Spektrums-Steuerungskurve (STK) von einem mobilen Endgerät (60) und/oder einem PC, vorzugsweise drahtlos, besonders bevorzugt über eine kurzreichweitige Funkverbindung, an eine Steuereinrichtung (41) der LED-Leuchte (100) übertragen wird.

8. Verfahren nach Anspruch 7, wobei Veränderungen der Spektrums-Steuerungskurve (STK) im mobilen Endgerät (60) und/oder dem PC gespeichert werden.

9. Verfahren nach einem der vorstehenden Ansprüche, wobei in einer Initialisierungsprozedur über eine Benutzerschnittstelle (61) benutzerspezifische Parameter (P1, P2, ...) abgefragt werden und auf Basis der benutzerspezifischen Parameter (P1, P2, ...) eine benutzerspezifische individuelle Start-Spektrums-Steuerungskurve (S-STK) ermittelt wird.

10. Verfahren nach Anspruch 9, wobei die benutzerspezifischen Parameter benutzerverhaltensspezifische Parameter und/oder benutzergefühlsspezifische Parameter umfassen.

11. Verfahren nach einem der vorstehenden Ansprüche, wobei bei Empfang eines Kurzzeitdosisveränderungssignals (DHS), vorzugsweise eines Dosiserhöhungssignals (DHS), zumindest die erste LED-Anordnung (1) für eine vordefinierte Dosisveränderungs-Zeitspanne (Δt_{B}) abweichend von der vorgegebenen Spektrums-Steuerungskurve (STK) so angesteuert wird, dass sie mit einer vorgegebenen Mindestleistung betrieben wird oder der Anteil des Lichts dieser ersten LED-Anordnung (1) innerhalb des Gesamtlichtspektrums der LED-Anordnungen (1, 2) einen bestimmten Mindestanteil beträgt, und nach Ablauf der vordefinierten Dosisveränderungs-Zeitspanne (Δt_{B}) die LED-Anordnungen (1, 2) gemäß einer vorgegebenen Steuerungsregel so angesteuert werden, dass das Gesamtlichtspektrum wieder dem aktuellen Wert der vorgegebene Spektrums-Steuerungskurve (STK) entspricht.

12. Verfahren nach Anspruch 11, wobei nach Empfang des Kurzzeitdosisveränderungssignals (DHS) die erste LED-Anordnung (1) in der vordefinierten Dosisveränderungs-Zeitspanne (Δt_{B}) mit einem maximalen Anteil am Gesamtlichtspektrum, vorzugsweise mit einer maximalen Leistung, betrieben wird.

13. Verfahren nach einem der vorstehenden Ansprüche, wobei die erste LED-Anordnung (1) und die zweite LED-Anordnung (2) jeweils in einem Pulsweitenmodulationsverfahren angesteuert werden, wobei die LED-Anordnungen (1, 2) mit einem gemeinsamen Gesamtstrom betrieben werden und dieser Gesamtstrom in zeitlich verschiedenen Phasen auf die verschiedenen LED-Anordnungen (1, 2) umgeschaltet wird und dabei zumindest teilweise bei einem Umschalten des Gesamtstroms von einer LED-Anordnung (1) auf eine andere LED-Anordnung (2) kurzzeitig ein paralleler Betrieb der LED-Anordnungen (1, 2) erfolgt.

14. LED-Leuchte (100), mit zumindest einer ersten LED-Anordnung (1) und einer zweiten LED-Anordnung (2), wobei die erste LED-Anordnung (1) und die zweite LED-Anordnung (2) im Betrieb Licht mit unterschiedlichen Lichtspektren aussenden und dabei vorzugsweise die erste LED-Anordnung (1) einen höheren Blaulichtanteil aussendet als die zweite LED-Anordnung (2),
und einer Steuerungsanordnung (40), welche ausgebildet ist, um die Anteile des von der ersten LED-Anordnung (1) und der zweiten LED-Anordnung (2) ausgesendeten Lichts innerhalb eines Gesamtlichtspektrums der LED-Anordnungen (1, 2) gemäß einer vorgegebenen zeitabhängigen, vorzugsweise zirkadianen, Spektrums-Steuerungskurve (STK) zu steuern,
**dadurch gekennzeichnet, dass**
die Steuerungsanordnung (40) so ausgebildet ist, dass sie bei Empfang eines Veränderungssignals von einer Benutzerschnittstelle zur manuellen Veränderung der Spektrums-Steuerungskurve für einen aktuellen Zeitpunkt die Spektrums-Steuerungskurve (STK) lokal modifiziert und diese lokale Modifikation zumindest teilweise bei einem nachfolgenden erneuten Durchlauf der Spektrums-Steuerungskurve (STK) automatisch berücksichtigt.

15. LED-Leuchte (100) nach Anspruch 14, wobei die Steuerungsanordnung (40) eine Dimmer-Schnittstelle (18, 68) aufweist und so ausgebildet ist, dass mittels der Dimmer-Schnittstelle (18, 68) unabhängig von der Spektrums-Steuerungskurve (STK) die Gesamtmenge des Lichts der LED-Anordnungen (1, 2) verstellbar ist.

## Claims

1. A method for controlling an LED lamp (100), which comprises at least one first LED arrangement (1) and one second LED arrangement (2), the first LED arrangement (1) and the second LED arrangement (2) emitting light with different light spectra during operation in the process and the first LED arrangement (1) preferably emitting a higher blue-light portion than the second LED arrangement (2),
the portions of the light emitted by the first LED arrangement (1) and the second LED arrangement (2) within a total light spectrum of the LED arrangements (1, 2) being controlled in accordance with a predetermined time-dependent, preferably circadian, spectrum control curve (STK),
**characterized in that**
upon receipt of a change signal from a user interface to manually change the spectrum control curve for a current instant, the spectrum control curve (STK) is locally modified and this local modification is automatically taken into account at least partially during a subsequent new pass of the spectrum control curve (STK).

2. The method according to Claim 1, wherein a local modification of the spectrum control curve (STK) is accepted in a subsequent pass of the spectrum control curve (STK) for a predefined portion, preferably approx. 30 %.

3. The method according to Claim 1 or 2, wherein the at least partial acceptance of the local modification of the spectrum control curve (STK) only takes place in a subsequent pass if a learning mode of a control arrangement (40) of the LED lamp (100) is activated.

4. The method according to one of the preceding claims, wherein argument values are specified as data points (SP1, SP2, ..., SP5) for the spectrum control curve (STK) at various instants in each case and an interpolation function is determined as spectrum control curve (STK) on the basis of these data points (SP1, SP2, ..., SP5).

5. The method according to one of the preceding claims, wherein a change of the spectrum control curve (DHS) takes place by adding and/or removing and/or changing data points (SP1, SP2, ..., SP5).

6. The method according to one of the preceding claims, wherein the spectrum control function (STK) and/or the data points (SP1, SP2, ..., SP5) are output graphically on a graphical user interface (61) and can be changed with the aid of the graphical user interface (61).

7. The method according to one of the preceding claims, wherein a spectrum control curve (STK) is transmitted from a mobile terminal (60) and/or a PC, preferably wirelessly, particularly preferably via a short-range wireless connection, to a control device (41) of the LED lamp (100).

8. The method according to Claim 7, wherein changes of the spectrum control curve (STK) are stored on the mobile terminal (60) and/or the PC.

9. The method according to one of the preceding claims, wherein user-specific parameters (P1, P2, ...) are requested in an initialization procedure by means of a user interface (61) and a user-specific individual start spectrum control curve (S-STK) is determined on the basis of the user-specific parameters (P1, P2, ...).

10. The method according to Claim 9, wherein the user-specific parameters comprise user-behaviour-specific parameters and/or user-feeling-specific parameters.

11. The method according to one of the preceding claims, wherein, upon receipt of a short-term dose change signal (DHS), preferably a dose-increase signal (DHS), at least the first LED arrangement (1) is controlled differently from the predetermined spectrum control curve (STK) for a predefined dose-change time period (Δt_{B}) in such a manner that it is operated with a predetermined minimum power or the portion of the light of this first LED arrangement (1) constitutes a certain minimum portion within the total light spectrum of the LED arrangements (1, 2), and after the expiry of the predefined dose-change time period (Δt_{B}), the LED arrangements (1, 2) are controlled according to a predetermined control rule in such a manner that the total light spectrum again corresponds to the current value of the predetermined spectrum control curve (STK).

12. The method according to Claim 11, wherein upon receiving the short-term dose change signal (DHS), the first LED arrangement (1) is operated in the predefined dose-change time period (Δt_{B}) with a maximum portion of the total light spectrum, preferably with a maximum power.

13. The method according to one of the preceding claims, wherein the first LED arrangement (1) and the second LED arrangement (2) are controlled in a pulse-width modulation method in each case, wherein the LED arrangements (1, 2) are operated with a common total current and this total current is switched over in temporally different phases to the different LED arrangements (1, 2) and in this case, at least to some extent, during a switch over of the total current from one LED arrangement (1) to another LED arrangement (2), a parallel operation of the LED arrangements (1, 2) takes place for a short time.

14. An LED lamp (100), having at least one first LED arrangement (1) and one second LED arrangement (2), the first LED arrangement (1) and the second LED arrangement (2) emitting light with different light spectra during operation in the process and the first LED arrangement (1) preferably emitting a higher blue-light portion than the second LED arrangement (2),
and a control arrangement (40), which is constructed in order to control the portions of the light emitted by the first LED arrangement (1) and the second LED arrangement (2) within a total light spectrum of the LED arrangements (1, 2) in accordance with a predetermined time-dependent, preferably circadian, spectrum control curve (STK),
**characterized in that**
the control arrangement (40) is constructed in such a manner that, upon receipt of a change signal from a user interface to manually change the spectrum control curve for a current instant, it locally modifies the spectrum control curve (STK) and automatically takes this local modification into account at least partially during a subsequent new pass of the spectrum control curve (STK).

15. The LED lamp (100) according to Claim 14, wherein the control arrangement (40) has a dimmer interface (18, 68) and is constructed in such a manner that the total quantity of the light of the LED arrangements (1, 2) can be adjusted by means of the dimmer interface (18, 68) independently of the spectrum control curve (STK).

## Revendications

1. Procédé de commande d'un éclairage à diodes électroluminescentes (DEL) (100), lequel comprend au moins un premier système à DEL (1) et un deuxième système à DEL (2), sachant que le premier système à DEL (1) et le deuxième système à DEL (2) émettent en service de la lumière avec des spectres lumineux différents et de préférence à cet effet le premier système à DEL (1) émet une partie de lumière bleue plus élevée que le deuxième système à DEL (2),
sachant que les parties de la lumière émise par le premier système à DEL (1) et le deuxième système à DEL (2) sont commandées à l'intérieur d'un spectre de lumière total des systèmes à DEL (1, 2) selon une courbe de commande spectrale (STK) prédéfinie en fonction du temps, de préférence circadienne,
**caractérisé en ce que**
la courbe de commande spectrale (STK) est localement modifiée lors de la réception d'un signal de modification d'une interface d'utilisateur pour modification manuelle de la courbe de commande spectrale pour un moment actuel et cette modification locale est prise automatiquement en considération au moins en partie lors d'un passage ultérieur renouvelé de la courbe de commande spectrale (STK).

2. Procédé selon la revendication 1, sachant qu'une modification locale de la courbe de commande spectrale (STK) est prise en charge lors d'un passage ultérieur de la courbe de commande spectrale (STK) pour une partie prédéfinie, de préférence à environ 30 %.

3. Procédé selon la revendication 1 ou 2, sachant que la prise en charge au moins partielle de la modification locale de la courbe de commande spectrale (STK) n'a lieu lors d'un passage ultérieur que si un mode d'apprentissage d'un système de commande (40) de l'éclairage à DEL (100) est activé.

4. Procédé selon l'une quelconque des revendications précédentes, sachant que pour la courbe de commande spectrale (STK) des valeurs de point de repère sont respectivement prédéfinies à différents moments en tant que point de repère (SP1, SP2, ..., SP5) et une fonction d'interpolation est déterminée en tant que courbe de commande spectrale (STK) sur la base de ces points de repère (SP1, SP2, ..., SP5).

5. Procédé selon l'une quelconque des revendications précédentes, sachant qu'une modification de la courbe de commande spectrale (DHS) a lieu en ajoutant et/ou en enlevant et/ou en modifiant des points de repère (SP1, SP2, ..., SP5).

6. Procédé selon l'une quelconque des revendications précédentes, sachant que la fonction de commande spectrale (STK) et/ou les points de repère (SP1, SP2, ..., SP5) sont édités graphiquement sur une interface d'utilisateur graphique (61) et peuvent être modifiés à l'aide de l'interface d'utilisateur graphique (61).

7. Procédé selon l'une quelconque des revendications précédentes, sachant qu'une courbe de commande spectrale (STK) est transmise par un terminal mobile (60) et/ou un ordinateur, de préférence sans fil, en particulier de préférence par une liaison radio à faible portée, à un système de commande (41) de l'éclairage à DEL (100).

8. Procédé selon la revendication 7, sachant que les modifications de la courbe de commande spectrale (STK) sont mémorisées dans le terminal mobile (60) et/ou l'ordinateur.

9. Procédé selon l'une quelconque des revendications précédentes, sachant que dans une procédure d'initialisation, des paramètres (P1, P2, ...) spécifiques à l'utilisateur sont interrogés par le biais d'une interface d'utilisateur (61) et une courbe de commande spectrale de mise en marche (S-STK) individuelle spécifique à l'utilisateur est déterminée sur la base des paramètres spécifiques à l'utilisateur (P1, P2, ...).

10. Procédé selon la revendication 9, sachant que les paramètres spécifiques à l'utilisateur comprennent des paramètres spécifiques au comportement de l'utilisateur et/ou des paramètres spécifiques aux intuitions de l'utilisateur.

11. Procédé selon l'une quelconque des revendications précédentes, sachant que lors de la réception d'un signal de modification de dose de courte durée (DHS), de préférence d'un signal d'augmentation de dose (DHS), au moins le premier système à DEL (1) est commandé pour une marge de temps prédéfinie de modification de dose (Δt_{B}) dérivant de la courbe de commande spectrale prédéfinie (STK) de telle manière qu'il est activé avec une puissance minimale prédéfinie ou la partie de la lumière de ce premier système à DEL (1) comporte une partie minimale déterminée à l'intérieur du spectre total de lumière des systèmes à DEL (1, 2) et après expiration de la marge de temps de modification de dose prédéfinie (At_{B}), les systèmes à DEL (1, 2) sont commandés selon une règle de commande prédéfinie de telle manière que le spectre total de lumière correspond à nouveau à la valeur actuelle de la courbe de commande spectrale prédéfinie (STK).

12. Procédé selon la revendication 11, sachant qu'après réception du signal de modification de dose de courte durée (DHS), le premier système à DEL (1) est activé dans la marge de temps de modification de dose prédéfinie (Δt_{B}) avec une partie maximale sur le spectre total de lumière, de préférence avec une puissance maximale.

13. Procédé selon l'une quelconque des revendications précédentes, sachant que le premier système à DEL (1) et le deuxième système à DEL (2) sont commandés respectivement dans un procédé de modulation d'impulsion en largeur, sachant que les systèmes à DEL (1, 2) sont activés avec un courant total commun et ce courant total est commuté en phases différentes dans le temps sur les différents systèmes à DEL (1, 2) et qu'à cet effet un fonctionnement parallèle des systèmes à DEL (1, 2) a lieu momentanément, au moins en partie, lors d'un basculement de commutation du courant total d'un système à DEL (1) sur un autre système à DEL (2).

14. Eclairage à DEL (100) avec au moins un premier système à DEL (1) et un deuxième système à DEL (2), sachant que le premier système à DEL (1) et le deuxième système à DEL (2), émettent en service de la lumière avec des spectres lumineux différents et à cet effet, de préférence, le premier système à DEL (1) émet une partie de lumière bleue plus élevée que le deuxième système à DEL (2),
et un système de commande (40), lequel est constitué pour commander les parties de la lumière émise par le premier système à DEL (1) et le deuxième système à DEL (2) à l'intérieur d'un spectre total de lumière des systèmes de DEL (1, 2) conformément à une courbe de commande spectrale (STK) prédéfinie en fonction du temps, de préférence circadienne, **caractérisé en ce que**
le système de commande (40) est constitué de telle manière qu'il modifie localement la courbe de commande spectrale (STK) lors de la réception d'un signal de modification d'une interface d'utilisateur pour modification manuelle de la courbe de commande spectrale pour un moment actuel et prend automatiquement en considération au moins en partie cette modification locale lors d'un passage ultérieur renouvelé de la courbe de commande spectrale (STK).

15. Eclairage à DEL (100) selon la revendication 14, sachant que le système de commande (40) comporte une interface de gradation (18, 68) et est constitué de telle sorte que la quantité totale de la lumière des systèmes à DEL (1, 2) peut être réglée au moyen de l'interface de gradation (18, 68) indépendamment de la courbe de commande spectrale (STK).
